# EUROPÄISCHE PATENTSCHRIFT

(11) **EP 2 389 271 B1**
(45) Veröffentlichungstag und Bekanntmachung des Hinweises auf die Patenterteilung: **23.03.2016**
(21) Anmeldenummer: 10705261.5
(22) Anmeldetag: 18.01.2010
(51) Int. Cl.: B23K 26/40, A61C 1/00, B23K 26/04, B23K 26/073

(54) **VERFAHREN ZUR MATERIALBEARBEITUNG UND LASERBEARBEITUNGSGERÄT ZUR MATERIALBEARBEITUNG**
METHOD FOR MATERIAL MACHINING AND LASER MACHINING DEVICE FOR MATERIAL MACHINING
PROCÉDÉ D'USINAGE DE MATÉRIAUX ET DISPOSITIF D'USINAGE LASER POUR L'USINAGE DE MATÉRIAUX

(30) Priorität: 20.01.2009 DE 102009005194
(43) Veröffentlichungstag der Anmeldung: 30.11.2011
(73) Patentinhaber: Lumera Laser GmbH, 67661 Kaiserslautern (DE); Kasenbacher, Anton, 83278 Traunstein (DE)
(72) Erfinder: KASENBACHER, Anton, 83278 Traunstein (DE)
(74) Vertreter: Patentanwälte Lambsdorff & Lange
(86) Internationale Anmeldenummer: PCT/DE2010/075005
(87) Internationale Veröffentlichungsnummer: WO 2010/083825

(56) Entgegenhaltungen:
- EP-A1- 0 600 441
- EP-A1- 1 927 880
- WO-A1-2008/089292
- WO-A1-2010/031478
- WO-A1-2010/049025
- US-A1- 2004 259 053
- US-A1- 2007 119 829
- US-A1- 2008 255 549
- US-B1- 7 306 459
- ZHU T C ET AL: "The role of photodynamic therapy (PDT) physics" MEDICAL PHYSICS, AIP, MELVILLE, NY, US LNKD- DOI:10.1118/1.2937440, Bd. 35, Nr. 7, 16. Juni 2008 (2008-06-16), Seiten 3127-3136, XP002553540 ISSN: 0094-2405
- WILSON B C ET AL: "The physics, biophysics and technology of photodynamic therapy" PHYSICS IN MEDICINE AND BIOLOGY, TAYLOR AND FRANCIS LTD. LONDON, GB LNKD- DOI:10.1088/0031-9155/53/9/R01, Bd. 53, Nr. 9, 9. April 2008 (2008-04-09), Seiten R61-R109, XP002553539 ISSN: 0031-9155 [gefunden am 2008-05-07]

## Beschreibung

Die vorliegende Erfindung betrifft ein Verfahren zur Materialbearbeitung und ein Laserbearbeitungsgerät zur Materialbearbeitung, entsprechend dem Oberbegiff des Anspruchs 9, wie z.B. aus der US-A-2004/0259053 bekannt.

Die Eigenschaften der Laserstrahlung, insbesondere die Intensität und gute Fokussierbarkeit, haben dazu geführt, dass Laser heutzutage in vielen Gebieten der Materialbearbeitung zum Einsatz kommen. Bei Laserbearbeitungsverfahren wird der Laserstrahl von dem zu bearbeitenden Werkstück absorbiert und durch die hohe Energie des Laserstrahls wird Material des Werkstücks erhitzt und aufgeschmolzen oder verdampft. Auf diese Weise können beispielsweise Löcher in Metallplatten gebohrt oder Halbleiterwafer in einzelne Halbleiterchips separiert werden. Die Laserbearbeitung erfolgt üblicherweise mittels gepulster Laserstrahlung in speziellen Laserbearbeitungsvorrichtungen. Als Laserstrahlquellen werden üblicherweise CO₂- oder Festkörperlaser, wie beispielsweise Nd:YAG-, Nd:YVO₄- oder Nd:GdVO₄-Laser verwendet. Ein wichtiges Merkmal eines Laserbearbeitungsverfahrens ist der Durchsatz, d.h. beispielsweise die Anzahl an Löchern, die innerhalb einer Zeiteinheit in eine Metallplatte gebohrt werden können. Dies hängt wesentlich von der Effizienz des durch den Laserstrahl bewirkten Abtragungs- oder Ablationsvorgangs ab. Neben anderen Aspekten besteht hier ein ständiges Bestreben nach Erhöhung der Effizienz und damit entweder einer Steigerung der Bearbeitungsgeschwindigkeit oder einem verringertem Energieeinsatz.

Ein weiteres Qualitätskriterium einer Laserbearbeitungsvorrichtung kann in ihrer Verwendbarkeit für unterschiedliche Bearbeitungsaufgaben, insbesondere ihre Anwendung auf unterschiedliche zu bearbeitende Materialien gesehen werden. Es kann die Situation eintreten, dass während eines Fabrikationsvorgangs unterschiedliche Materialien bearbeitet werden sollen. Beispielsweise soll bei einer bedruckten PCB-(printed circuit board)Schaltungsplatine eine aus einem Metall bestehende Leiterbahn, ausserdem die aus einem Kunststoff bestehende Platine und schliesslich noch ein auf die Platine aufgebrachter aus Silizium bestehender Halbleiterchip bearbeitet werden, beispielsweise mit Durchgangslöchern versehen werden. Ein Nachteil konventioneller Laserbearbeitungsvorrichtungen besteht darin, dass sie im Regelfall nur jeweils einen dieser Bearbeitungsvorgänge durchführen können. Das liegt daran, dass die Bearbeitungsvorgänge davon abhängen, dass ein genügend grosser Anteil der Laserstrahlung von dem zu bearbeitenden Material absorbiert wird. Konventionelle Laserbearbeitungsvorrichtungen arbeiten jedoch zumeist bei einer bestimmten festgelegten Wellenlänge, während die zu bearbeitenden Materialien ihr maximales oder hohes Absorptionsvermögen bei unterschiedlichen Wellenlängen aufweisen.

Wenn in dieser Anmeldung von Materialbearbeitung die Rede ist, so sollen damit prinzipiell Materialien aller Art umfasst sein, d.h. insbesondere Materialien aller Aggregatzustände, Materialien natürlicher oder synthetischer Art sowie anorganische oder organische Materialien. Ein Teilbereich dieser Materialien sind biologische Gewebe wie devitale und vitale biologische Gewebe, die auch Hartgewebe wie etwa Zahnmaterial umfassen. Ein beispielhaftes Anwendungsgebiet der vorliegenden Anmeldung betrifft somit das Gebiet der Zahnheilkunde, wobei anstelle eines mechanischen Bohrers zur Ablation bzw. Abtragung von Zahnmaterial, insbesondere kariösem Zahnmaterial, ein Laserbearbeitungs-Verfahren und ein entsprechendes Laserbearbeitungsgerät zum Einsatz kommen können. Es können jedoch ebenso andere Arten von biologischen Geweben und Gewebetypen, wie beispielsweise andere Arten von Hartgewebe, Weichgewebe und Gewebeflüssigkeiten, betroffen sein. Ein anderes potentielles Anwendungsgebiet kann dementsprechend beispielsweise das Gebiet der Augenheilkunde sein.

Ein weiterer bedeutender Aspekt dieser Anmeldung besteht in der Gewährleistung maximaler sogenannter Biosicherheit (Biosafety) bei Durchführung der hier beschriebenen Bearbeitungsverfahren, insbesondere in der Form der Vermeidung exzessiver ultravioletter Strahlung. Es ist bekannt, dass bei einer Laserbearbeitung der in dieser Anmeldung beschriebenen Art jeder Laserpuls mit einem dünnen Oberflächenbereich des Materials derart wechselwirken soll, dass im Fokus des Bearbeitungs-Laserstrahls ein Plasma gebildet wird. Dieses Plasma kann Ursache von ultravioletter Strahlung sein, einmal als Folge von Rekombinationsprozessen und zum anderen in der Form Planck'scher Strahlung aufgrund der Temperatur des Plasmas. Die ultraviolette Strahlung kann, wie allgemein bekannt ist, gesundheitsschädigende Auswirkungen haben. Dies gilt natürlich in besonderem Masse für den hier bereits genannten Anwendungsfall der Zahnbehandlung. Es besteht somit ein generelles Ziel darin, diese gesundheitsschädigenden Auswirkungen unter Beibehaltung grösstmöglicher Ablationseffizienz zu minimieren.

Es ist demgemäss Aufgabe der vorliegenden Erfindung, ein Verfahren zur Materialbearbeitung und ein Laserbearbeitungsgerät zur Materialbearbeitung anzugeben, mit welchen eine effiziente Bearbeitung eines Materials gewährleistet werden kann sowie darüber hinaus die Vielseitigkeit der Verwendung eines Laserbearbeitungsgeräts, d.h. insbesondere die Verwendbarkeit für unterschiedliche Materialien erhöht werden kann. Es ist eine weitere Aufgabe der vorliegenden Erfindung, ein Verfahren zur Materialbearbeitung und ein Laserbearbeitungsgerät zur Materialbearbeitung anzugeben, bei welchen die bei der Bearbeitung auftretende ultraviolette Strahlung minimiert werden kann.

Diese Aufgaben werden mit den Merkmalen der unabhängigen Patentansprüche gelöst. Vorteilhafte Weiterbildungen und Ausgestaltungen sind Gegenstand von Unteransprüchen.

Eine erste Erkenntnis der vorliegenden Erfindung besteht darin, dass bei der Ablation von biologischem Gewebe mit einem Laserstrahl nicht notwendigerweise das Gewebe selbst mit dem Laserstrahl beaufschlagt werden muss. Der Laserstrahl kann stattdessen in vorteilhafter Weise von einer Substanz absorbiert werden, welche infolge der Absorption im wesentlichen als eine Quelle freier oder quasi-freier Elektronen wirkt und solchermaßen die absorbierte Energie an das abzutragende Material überträgt. Als eine solche Substanz kann am wirkungsvollsten ein sogenannter Photosensitizer eingesetzt werden. Photosensitizer stellen chemische lichtempfindliche Verbindungen dar, die nach der Absorption eines Lichtquants eine fotochemische Reaktion eingehen. Die Aktivierung eines Photosensitizers kann durch Laserlicht geeigneter Wellenlänge und ausreichender Intensität erfolgen, wobei durch Lichtabsorption der Photosensitizer zuerst in einen relativ kurzlebigen Singulett-Zustand angeregt wird, der danach in einen stabileren (langlebigen) Triplett-Zustand übergeht. Dieser angeregte Zustand kann dann beispielsweise direkt mit dem abzutragenden Material reagieren.

Gemäß einem ersten Aspekt der vorliegenden Erfindung wird somit ein Verfahren zur Materialbearbeitung angegeben, bei welchem ein Photosensitizer in eine räumliche Umgebung eines zu bearbeitenden Bereiches des Materials gebracht wird, ein gepulster Bearbeitungs-Laserstrahl bereitgestellt wird, und der zu bearbeitende Bereich des Materials mit dem gepulsten Bearbeitungs-Laserstrahl bestrahlt wird.

Der Bearbeitungs-Laserstrahl kann dabei Laserpulse mit einer zeitlichen Halbwertsbreite in einem weiten Bereich zwischen 100 fs und 1 ns emittieren, wobei dieser Bereich auch jeden inkrementellen Zwischenwert umfasst und das Inkrement 100 fs beträgt.

Eine weitere Erkenntnis der vorliegenden Erfindung besteht darin, bei einem medizinischen Behandlungsverfahren für eine Diagnose, die gegebenenfalls begleitend zu einem Bearbeitungsverfahren durchzuführen ist, einen Marker einzusetzen, der zu bearbeitende oder zu ablatierende Bereiche sichtbar macht, wobei der Marker ebenfalls ein Photosensitizer sein kann und/oder durch Strahlung eines Lasers oder einer Lichtemissionsdiode (LED) kontinuierlich oder gepulst, mit einer geeigneten Wellenlänge, Dauer und Intensität anregbar ist. Es kann insbesondere vorgesehen sein, ein und denselben Photosensitizer für die Ablation wie auch für die Diagnose zu verwenden.

Eine weitere Erkenntnis der vorliegenden Erfindung besteht darin, einen mittels eines Laserstrahls zu bearbeitenden oder zu ablatierenden Bereich eines Materials mit einer Ummantelung zu umgeben und innerhalb dieser und einer damit verbundenen Laserstrahl-Ausrichteinheit ein Absaugkanalsystem zu integrieren.

Bezüglich der Auswahl des zu verwendenden Photosensitizers und der für die Ablation und/oder die Diagnose zu verwendenden Laserstrahlquelle gibt es verschiedene Möglichkeiten. Gemäß der hier vorgestellten Ausführungsformen wird der Photosensitizer und/oder die Wellenlänge der Laserpulse derart ausgewählt, dass der Laserstrahl durch eine Ein-Photonen-Absorption in dem Photosensitizer mindestens teilweise absorbiert wird, wobei die Absorption in der Nähe eines Absorptions-Maximums des Photosensitizers liegt. Diese erste Ausführungsform ist somit der linearen Optik zuzurechnen. Gemäß einer zweiten Ausführungsform, die der nicht-linearen Optik zuzurechnen ist, wird der Photosensitizer und/oder die Wellenlänge der Laserpulse derart ausgewählt, dass der Laserstrahl durch eine Zwei-Photonen-Absorption in dem Photosensitizer mindestens teilweise absorbiert wird, wobei die Absorption in der Nähe eines Absorptions-Maximums des Photosensitizers liegt. Gemäß einer dritten Ausführungsform, die ebenfalls der nicht-linearen Optik zuzurechnen ist, wird der Photosensitizer und/oder die Wellenlänge der Laserpulse derart ausgewählt, dass der Laserstrahl durch eine Multi-Photonen-Absorption in dem Photosensitizer mindestens teilweise absorbiert wird, wobei die Anzahl der absorbierten Photonen größer als 2 ist und die Absorption in der Nähe eines Absorptions-Maximums des Photosensitizers liegt.

Gemäß einer Ausführungsform wird eine Wiederholrate der Laserpulse in einem Bereich zwischen 1 Hz und 10 MHz eingestellt, wobei dieser Bereich auch jeden inkrementellen Zwischenwert umfasst und das Inkrement 1 Hz beträgt. Dabei kann auch vorgesehen sein, dass die Laserpulse in Form von Bursts mit jeweils einer vorgegebenen Anzahl von Laserpulsen erzeugt werden und beispielsweise jede zu bearbeitende Stelle auf dem zu ablatierenden Material mit einer vorgegebenen Anzahl von Bursts (beispielsweise einem Burst) beaufschlagt wird. Innerhalb eines Bursts können die Laserpulse auch eine in vorgegebener Weise variierende Pulsspitzenintensität aufweisen. Anstelle eines Bursts aus mehreren Laserpulsen kann auch vorgesehen sein, dass ein einzelner Laserpuls verwendet wird, diesem jedoch ein sogenannter ASE-(amplified spontaneous emission)Vorpuls vorangeht.

Gemäß einer Ausführungsform wird das Verfahren zur Ablation oder Abtragung von Zahnmaterial, insbesondere kariösem Zahnmaterial, eingesetzt. Dies bietet insofern ein vorteilhaftes Anwendungsgebiet, als kariöses Zahnmaterial bekanntermaßen eine durch den bakteriellen Befall bedingte poröse Struktur aufweist. In diese poröse Struktur kann der Photosensitizer eindringen, sodass er gewissermaßen in das abzutragende, kariöse Zahnmaterial eingebettet ist und nicht - wie in anderen Anwendungsfällen erforderlich - auf eine Oberfläche eines abzutragenden Materials aufgebracht werden muss.

Bei der Materialbearbeitung mit einem Kurzpulslaser wie einem Piko- oder Femtosekundenlaser wird innerhalb einer dünnen Oberflächenschicht im Fokus des Bearbeitungs-Laserstrahls ein Mikroplasma erzeugt, welches nach jedem einzelnen Puls im Verlauf einer Zeitspanne im Nano- bis Mikrosekundenbereich zerfällt. Bei dem Ablationsvorgang wird das Material per Interaktion der Laserphotonen mit den quasi-freien Elektronen nicht ionisiert, sondern minimal-invasiv thermo-mechanisch fragmentiert. Ein generelles Ziel besteht darin, das Mikroplasma stets im Schwellenbereich zu generieren, d.h. stets kleiner gleich der kritischen Elektrönendichte (bei LaserWellenlänge 1064 nm: 1,03 x 10²¹ Elektronen/cm³). Dadurch wird es möglich, den Ablationsvorgang insbesondere bei Zahn- oder anderen Gewebebehandlungen, nach Möglichkeit jedoch auch bei anderen Materialbearbeitungsverfahren, unter größtmöglicher medizinischer und biologischer Verträglichkeit und Vermeidung unerwünschter Nebeneffekte durchzuführen. Insbesondere sollen Plasmatemperaturen von größer gleich 11604,5 K (zweifache Temperatur der Sonnenoberfläche) mit der Folge von UV-Strahlen sowie Multiphotonen-Ionisation vermieden oder weitestgehend werden, um so zu erreichen, dass in dem Gewebe vorhandene Wassermoleküle nicht ionisiert werden. Weiterhin ist es im Hinblick auf die Begrenzung der thermischen und mechanischen Auswirkungen bei Zahnbehandlungen vorteilhaft, wenn die Pulslänge der Laserpulse in einem Bereich von ca. 100 fs - 100 ps, insbesondere bei ca. 10 ps, liegt. Die erfindungsgemäße Kombination aus einem indirekten Energieeintrag mittels Photosensitizern und der Verwendung von Pikosekunden-Laserimpulsen führt dann zu maximaler biologischmedizinischer Verträglichkeit der Behandlung. Insbesondere hinsichtlich der Stressrelaxation wird durch die Pikosekunden-Laserpulse eine optische Penetrationstiefe derart bewirkt, dass sich keinerlei Schockwellen ausbreiten können und die Behandlung damit schmerzfrei durchgeführt werden kann.

Gemäß einer Ausführungsform wird bei Zahn- oder Gewebebehandlungen die Energiedichte der Laserpulse in einem Bereich unterhalb von 7,5 J/cm² eingestellt. Insbesondere kann die Energie der Laserpulse in einem Bereich unterhalb von 100 µJ eingestellt werden und der Fokus des Bearbeitungs-Laserstrahls auf einer Oberfläche des Gewebes und/oder des Photosensitizers kann mit einem Fokusdurchmesser in einem Bereich zwischen 1 µm und 100 µm eingestellt werden, wobei der Bereich 1 µm bis 5 µm durch spezielle Optiken erreichbar ist. Durch diese Maßnahmen wird sichergestellt, dass die Plasmadichte stets unterhalb der kritischen Elektronendichte bleibt. Der erfindungsgemässe Einsatz eines Photosensitizers erlaubt es darüber hinaus, für die Ablation des biologischen Gewebes eine Energiedichte der Laserpulse zu verwenden, die deutlich unterhalb des oben genannten Werts, beispielsweise unterhalb 1,0 J/cm² liegt. Dies bedeutet, dass bei entsprechenden Energien der Laserpulse übliche Fokusgrößen verwendet werden können und kein zusätzlicher Aufwand hinsichtlich der Fokussierungsoptik betrieben werden muss. Es kann aber auch bedeuten, dass bei stärkerer Fokussierung gegebenenfalls eine Laserstrahlquelle mit niedrigeren Laserpulsenergien verwendet werden kann, beispielsweise eine Laserstrahlquelle, die lediglich aus einem Laseroszillator ohne Einsatz eines nachgeschalteten optischen Verstärkers besteht. Die zu erwartenden Gesamtkosten eines Laserbearbeitungsgeräts zur Durchführung des erfindungsgemässen Verfahrens könnten dadurch unter Umständen reduziert werden. Als Laserstrahlquelle genügt dann nämlich ein handelsüblicher Laseroszillator wie beispielsweise ein Festkörper-Laseroszillator, insbesondere ein Pikosekunden-Laseroszillator. Um eine möglichst kompakte Laserstrahlquelle bereitstellen zu können, ist es beispielsweise auch denkbar, eine Laserdiode oder eine Mehrfach-Anordnung (Array) von Laserdioden, insbesondere als Pikosekundenlaser, zu verwenden.

Generell bedeutet der erfindungsgemässe Einsatz eines Photosensitizers, dass für die Ablation jeglichen Materials eine Energiedichte der Laserpulse verwendet werden kann, die deutlich unterhalb derjenigen Energiedichte liegt, die ohne Verwendung des Photosensitizers notwendig wäre.

Im Allgemeinen wird mit dem Bearbeitungs-Laserstrahl ein bestimmter Oberflächenbereich des Materials bearbeitet, sodass der Laserstrahl gemäß einer weiteren Ausführungsform in geeigneter Weise über diesen Oberflächenbereich gescannt oder gerastert wird. In diesem Zusammenhang kann es sich zusätzlich als vorteilhaft erweisen, wenn der Bearbeitungs-Laserstrahl ein im wesentlichen rechteckförmiges Strahlprofil (im Englischen auch tophat) aufweist. Bei dem Scan-Vorgang kann dann vorgesehen sein, dass jeder von dem Fokus des Bearbeitungs-Laserstrahls erfasste Teilbereich von genau einem Laserpuls beaufschlagt wird. Diese Maßnahme kann auch unabhängig von dem Vorhandensein eines Tophat-Profils vorgesehen sein, etwa indem beispielsweise festgelegt wird, dass bei dem Scan-Vorgang einander benachbarte und von je einem Laserpuls erfasste Teilbereiche einen räumlichen Überlapp miteinander haben, dessen Fläche kleiner als die Hälfte oder kleiner als ein anderer Bruchteil der Fläche eines Teilbereichs ist. Auf diese Weise kann auch bei Vorhandensein eines Gauß-Profils als "Laserstrahl-Querschnitt" erreicht werden, dass im wesentlichen ein von dem Fokus des Bearbeitungs-Laserstrahls erfasster Teilbereich im wesentlichen von nur einem einzigen Laserpuls beaufschlagt wird.

Gemäß einer weiteren Ausführungsform kann vorgesehen sein, dass während der Bearbeitung die räumliche Lage des Fokus auf der Oberfläche des Bereichs konstant geregelt wird. Dies kann, wie weiter unter noch näher ausgeführt werden wird, durch eine Autofokus-Einheit verschiedenster Ausprägung erfolgen, wobei die mit optischen Mitteln zu erfolgende Regelung durch Einsatz eines als Blendschutz dienenden Fixierelements blendfrei erfolgen kann.

Gemäß einer weiteren bei Gewebsbehandlungen vorgesehenen Ausführungsform kann vorgesehen sein, dass vor Aufbringen des Photosensitizers der zu bearbeitende Bereich dadurch ermittelt wird, in dem auf das Gewebe ein Marker aufgebracht wird, welcher im Kontakt mit einer bestimmten Gewebeart, insbesondere geschädigtem Gewebe, eine charakteristische Färbung annimmt oder welcher ein anderes detektierbares Verhalten, etwa nach Anregung durch kohärente oder inkohärente elektromagnetische Strahlung zeigt. Der Marker kann dabei ebenfalls durch einen Photosensitizer gegeben sein, der somit einen Diagnose-Photosensitizer darstellt, während der für die Ablation verwendete Photosensitizer als Ablations-Photosensitizer bezeichnet werden kann. Der Marker kann jedoch ebenso durch einen anderen handelsüblichen Marker gebildet sein, der keine Photosensitizer-Eigenschaften aufweist. Der Ablations-Photosensitizer ist dagegen beispielsweise derart, dass er keine Marker-Eigenschaften aufweist, d.h. nicht-färbend (nonstaining) bei Kontaktierung mit verschiedenen Gewebearten wirkt.

Gemäss einer weiteren Ausführungsform kann auch ein Photosensitizer verwendet werden, der zunächst als Marker eingesetzt wird und anschließend für die Ablation verwendet wird. Dies könnte die Behandlung vereinfachen, indem nur diejenigen Bereiche des Photosensitizers, die einen Farbumschlag zeigen oder bei der Diagnose eine anderweitige entsprechende Reaktion zeigen, mit dem Laser für die anschließende Ablation bestrahlt werden. Mit anderen Worten wird für die Diagnose ein Photosensitizer eingesetzt, der identisch mit dem für die spätere Ablation verwendeten Photosensitizer ist. Die Diagnose beruht dann beispielsweise auf denselben Absorptionseigenschaften des Photosensitizers wie die spätere Ablation.

Gemäss einer weiteren Ausführungsform kann der für die Diagnose verwendete Marker oder Photosensitizer, der geschädigtes Gewebe anzeigen oder markieren soll, zusätzliche Eigenschaften aufweisen. Er kann beispielsweise als Säure-(pH-)Indikator und/oder als Bakterien- und/oder Viren- und/oder Tumorzellen-Indikator wirken, d.h. durch ein bestimmtes Verhalten wie einen Farbumschlag oder Fluoreszenzstrahlung anzeigen, wie hoch ein pH-Wert eines benachbarten Gewebes ist oder wie stark das Gewebe mit Bakterien und/oder Viren und/oder Tumorzellen infiziert ist. Der Photosensitizer kann auch so ausgebildet sein, dass er als sogenannter 3D-Indikator wirken kann, d.h. die Lichtimpulse derart reflektieren oder zurückwerfen kann, dass sie auf einen Detektor abgebildet werden können und über die Bestimmung der Laufzeit der ausgesendeten und von einem bestimmten Punkt zurückgeworfenen Lichtimpulse eine dreidimensionale Topographie der von dem Photosensitizer bedeckten Oberfläche bestimmt werden kann. Dies kann in besonders vorteilhafter Weise in einer Situation eingesetzt werden, in der zuvor mittels ein und desselben Photosensitizers festgestellt wurde, dass kein geschädigtes Gewebe mehr vorhanden ist und somit keine weiteren Ablationsvorgänge vonnöten sind. Eine durch die vorherigen Ablationsvorgänge hergestellte Kavität, beispielsweise Zahnkavität, soll anschließend in an sich bekannter Weise mit einem Material gefüllt werden, wofür die Form der Kavität bestimmt werden muss. Herkömmliche und zum Teil sehr aufwendige Methoden der Zahnheilkunde können ersetzt werden, wenn ein die Kavitätenoberfläche bedeckender Photosensitizer eingesetzt und mit der Diagnosestrahlung gescannt wird, so dass über die empfangenen Lichtpulse und deren Laufzeiten die Topographie der Kavität bestimmt werden kann. Es wird darauf hingewiesen, dass in einem derartigen Verfahren eine eigenständige Erfindung gesehen wird, die unabhängig von den hier hauptsächlich beschriebenen Aspekten angewendet werden kann, jedoch wahlweise nach Ermessen des Fachmanns mit allen in dieser Anmeldung beschriebenen Aspekten und Merkmalen kombiniert werden kann.

Gemäß einer weiteren Ausführungsform kann vorgesehen sein, dass bei der Diagnose einer Zahnbehandlung der zu bearbeitende Bereich ohne Verwendung eines Markers oder Photosensitizers ermittelt wird, indem nämlich das Vorhandensein eines in dem Gewebe erzeugten Signals und gegebenenfalls dessen Signalstärke ermittelt werden. Das Signal kann dabei die zweite oder eine höhere Harmonische einer auf das Gewebe eingestrahlten elektromagnetischen Strahlung sein. Die elektromagnetische Strahlung kann diejenige eines Diagnose-Laserstrahls sein, welcher eine Energiedichte auf der Oberfläche des Gewebes aufweist, welche kleiner ist als die Energiedichte, welche zur Bearbeitung des Gewebes erforderlich ist. Der Bearbeitungs-Laserstrahl und der Diagnose-Laserstrahl können von ein und derselben Laserstrahlquelle erzeugt werden. Insbesondere für die Unterscheidung zwischen nicht-geschädigtem Zahnmaterial und kariösem Zahnmaterial kann durch den Diagnose-Laserstrahl mittels des LIBS-Verfahrens (Laser Induced Breakdown Spectroscopy) im Infrarot-Bereich eine Anregung des Gewebes durchgeführt werden, wobei ein zurückgestreutes Signal einer zweiten Harmonischen ein gesundes Gewebe (z.B. mineralisationsfähige Kollagenfasern) anzeigt und das Ausbleiben eines solchen Signals ein kariöses Zahnmaterial (d.h. irreversibel geschädigte = mineralisationsunfähige Kollagenstrukturen) anzeigt. Ein Bereich des Gewebes kann mit dem Diagnose-Laserstrahl gescannt werden und die Daten der rückgestreuten zweiten Harmonischen können detektiert und gespeichert werden und auf der Basis dieser Daten kann dann bestimmt werden, in welchen Abschnitten des Bereiches eine Bearbeitung bzw. Ablation durch den Bearbeitungs-Laserstrahl erfolgen soll.

Gemäß einer weiteren Ausführungsform kann im Falle einer medizinischen Behandlung vorgesehen sein, dass ein Behandlungsverfahren computergesteuert durchgeführt wird und dabei insbesondere vorgesehen ist, dass eine online-Kontrolle der Laserparameter in Abhängigkeit von der gemessenen UV-Strahlung durchgeführt wird. Als entscheidendes Schwellenkriterium kann hier beispielsweise der dermatologische UV-Index herangezogen werden, d.h. eine Erhöhung oberhalb eines bestimmten vorgegebenen UV-Index-Schwellwerts führt automatisch zu einer Verringerung der Laserleistung, bis der UV-Index wieder unterhalb des Schwellwertes abgesunken ist. Zusätzlich kann noch vorgesehen sein, dass bei Auftreten anderer Ereignisse oder Auffälligkeiten die Laserstrahlung prophylaktisch entweder kurzzeitig oder dauerhaft unterbrochen werden kann. Dies kann beispielsweise vorgesehen sein, wenn die Therapiedauer eine vorgesehene maximale Zeit überschritten hat, festgestellt wird, dass zu viele Pulse auf einen einzelnen Ort abgegeben wurden, Laserinstabilitäten festgestellt werden oder andere Defekte apparativer Natur aufgetreten sind.

Gemäß einer weiteren Ausführungsform kann auch bei einer (nicht-medizinischen) Werkstückbearbeitung vorgesehen sein, dass vor Durchführung der eigentlichen Bearbeitung, d.h. Beaufschlagung des zu bearbeitenden Bereichs mit dem Bearbeitungs-Laserstrahl, eine Diagnose durchgeführt wird, beispielsweise eine Diagnose derart, dass die Materialart eines Bereichs eines Werkstücks bestimmt wird und anschliessend der Bearbeitungs-Laserstrahl eingeschaltet wird oder nicht. Beispielsweise kann auch hier ein Diagnose-Laserstrahl verwendet und auf den Bereich des Werkstücks gerichtet werden, wobei der Diagnose-Laserstrahl aus ein und derselben Laserstrahlquelle stammt wie der Bearbeitungs-Laserstrahl, jedoch eine mittlere Intensität besitzt, mit der eine Bearbeitung bzw. Ablation nicht möglich ist. Es kann dann eine von dem Werkstück zurückgeworfene Strahlung, etwa reflektierte Strahlung, Fluoreszenz-Strahlung, Wärmestrahlung, höhere Harmonische oder dergleichen detektiert, ausgewertet und aus der Auswertung die Materialart ermittelt werden.

Gemäß einem zweiten Aspekt der vorliegenden Erfindung wird ein Verfahren zur Materialbearbeitung angegeben, bei welchem in einem Bearbeitungs-Modus ein gepulster Laserstrahl bereitgestellt wird, ein zu bearbeitender Bereich des Materials mit dem gepulsten Bearbeitungs-Laserstrahl bestrahlt wird, eine von einer Umgebung des bearbeiteten Bereichs emittierte elektromagnetische Strahlung detektiert wird, und der gepulste Laserstrahl in Abhängigkeit von der detektierten elektromagnetischen Strahlung eingestellt wird.

Gemäß einer Ausführungsform kann die elektromagnetische Strahlung eine ultraviolette Strahlung sein, da diesem Spektralbereich hinsichtlich biologischer Verträglichkeit die größte Relevanz zukommt. Es kann jedoch auch elektromagnetische Strahlung in einem anderen Spektralbereich detektiert werden, beispielsweise im infraroten Wellenlängenbereich, da es auch hier bei Überschreiten bestimmter Dosisschwellen der IR-A- und der IR-B-Strahlung zu gesundheitlichen Beeinträchtigungen kommen kann. Da es generell stets auf die Dosis ankommt, gilt dies auch für weitere Wellenlängenbereiche des elektromagnetischen Spektrums.

Gemäß einer Ausführungsform kann die elektromagnetische Strahlung von mindestens einem entsprechenden Detektor detektiert werden. Im Falle von UV-Strahlung sind demnach ein oder mehrere UV-Detektoren bereitzustellen. Es kann dabei mit einer Mehrzahl von UV-Detektoren sowohl die Intensität als auch die Wellenlänge und der UV-Index der detektierten UV-Strahlung bestimmt werden.

Gemäß einer weiteren Ausführungsform kann eine online-Kontrolle des Bearbeitungsvorgangs durchgeführt werden, indem mindestens ein Parameter des Bearbeitungs-Laserstrahls verändert wird, wenn eine Auswertung des von der mindestens einen UV-Diode gelieferten Signal ergibt, dass die detektierte UV-Strahlung gemäß vorgegebener Kriterien zu hoch ist bzw. bestimmte Schwellwerte überschreitet. Der zu verändernde Parameter des Bearbeitungs-Laserstrahls kann beispielsweise die Pulsspitzenintensität, die Pulsdauer, die Repetitionsfrequenz, die Anzahl von Pulsen innerhalb eines Bursts oder auch ein anderer geeigneter Parameter oder mehrere der genannten Parameter sein. Der mindestens eine Parameter wird so lange verändert, bis das Signal des mindestens einen UV-Detektors anzeigt, dass die detektierte UV-Strahlung wieder in einem akzeptablen Bereich liegt.

Gemäß einem dritten Aspekt der vorliegenden Erfindung wird ein Verfahren zur Materialbearbeitung angegeben, bei welchem in einem Bearbeitungs-Modus ein gepulster Laserstrahl bereitgestellt wird, ein zu bearbeitender Bereich des Materials mit dem gepulsten Bearbeitungs-Laserstrahl bestrahlt wird, und der gepulste Laserstrahl derart eingestellt wird, dass mindestens eine der folgenden Bedingungen erfüllt ist: die Temperatur eines mit dem Bearbeitungs-Laserstrahl erzeugten Plasmas beträgt maximal 11604.5 K, entsprechend 1 eV, die mittlere Oszillationsenergie der Elektronen im elektromagnetischen Wechselfeld des Bearbeitungs-Laserstrahls liegt unterhalb 0,021 eV.

Ein derartiges Verfahren gemäß dem dritten Aspekt kann mit den oben beschriebenen Verfahren gemäß dem ersten und dem zweiten Aspekt kombiniert werden. Bei einer Kombination mit einem Verfahren gemäß dem zweiten Aspekt kann beispielsweise vorgesehen sein, dass vor Aufnahme des Bearbeitungsverfahrens zunächst eine Berechnung mit dem Ziel durchgeführt wird, anhand der relevanten Parameter des zu bearbeitenden Materials geeignete Parameter des Bearbeitungs-Laserstrahls zu ermitteln, mit denen sich die oben genannten Bedingungen hinsichtlich der Plasmatemperatur und der mittleren Oszillationsenergie erzielen lassen oder voraussichtlich erzielen lassen. Im laufenden Bearbeitungsbetrieb wird dann gemäß dem zweiten Aspekt die elektromagnetische Strahlung, etwa die UV-Strahlung, ermittelt und in Abhängigkeit davon der Bearbeitungs-Laserstrahl laufend nachreguliert, so dass die detektierte elektromagnetische Strahlung bestimmte vorgegebene Schwellwerte nicht überschreitet.

Gemäß einem weiteren Aspekt der vorliegenden Erfindung wird ein Laserbearbeitungsgerät zur Materialbearbeitung nach dem Verfahren gemäß dem ersten Aspekt angegeben, wobei das Laserbearbeitungsgerät eine Laserstrahlquelle zum Bereitstellen eines gepulsten Bearbeitungs-Laserstrahls, eine Laserstrahl-Ausrichteinheit zur Auskopplung des Laserstrahls in Richtung auf einen zu bearbeitenden Bereich des Materials, und eine Ausgabeeinrichtung zur Ausgabe eines Photosensitizers in Richtung auf eine Umgebung des zu bearbeitenden Bereichs des Materials aufweist, wobei insbesondere die Ausgabeeinrichtung mit der Laserstrahl-Ausrichteinheit verbunden ist.

Gemäß einer Ausführungsform des Laserbearbeitungsgeräts kann vorgesehen sein, dass die Laserstrahlquelle durch einen Laseroszillator gegeben ist, dessen Ausgangspulse ohne eine weitere Verstärkung der Ausrichteinheit zuführbar sind, so dass - wie bereits weiter oben ausgeführt - die Laserstrahlquelle in kostengünstiger Weise ausgeführt werden kann. Es kann sich in diesem Fall als notwendig erweisen, den Laserstrahl stärker zu fokussieren, um die notwendige Energiedichten erreichen zu können. Es kann aber auch eine Laserstrahlquelle bestehend aus einem Laseroszillator und einem optischen Verstärker der Laserpulse verwendet werden, wobei dann eine konventionelle Fokussierung sich als ausreichend erweisen kann.

Gemäß einer Ausführungsform des Laserbearbeitungsgeräts sind die Wellenlänge der Laserpulse und der Photosensitizer derart ausgewählt, dass der Bearbeitungs-Laserstrahl durch eine Ein-Photonen-Absorption in dem Photosensitizer mindestens teilweise absorbiert wird, wobei die Absorption in der Nähe eines Absorptions-Maximums des Photosensitizers liegt.

Gemäß einer Ausführungsform des Laserbearbeitungsgeräts sind die Wellenlänge der Laserpulse und der Photosensitizer derart ausgewählt, dass der Bearbeitungs-Laserstrahl durch eine N-Photonen-Absorption mit N ≥ 2 in dem Photosensitizer mindestens teilweise absorbiert wird, wobei die Absorption in der Nähe eines Absorptions-Maximums des Photosensitizers liegt.

Gemäß einer Ausführungsform weisen die Laserpulse eine Halbwertsbreite in einem Bereich zwischen 100 fs und 1 ns auf, wobei dieser Bereich auch jeden inkrementellen Zwischenwert umfasst und das Inkrement 100 fs beträgt.

Gemäß einer Ausführungsform liegt die Wellenlänge der Laserpulse in einem Bereich zwischen 100 nm und 10,6 µm, wobei dieser Bereich auch jeden inkrementellen Zwischenwert umfasst und das Inkrement 100 nm beträgt. Dieser Bereich umfasst somit beispielsweise auch die Ausgangs-Wellenlängen von Er:YSGG- (λ = 2,7 µm) oder Er:YAG-Lasern (λ = 2,94 µm), deren Wellenlängen im infraroten Wellenlängenbereich liegen oder einen CO₂-Laser dessen Ausgangs-Wellenlänge bei 10,6 µm liegt. Sämtliche Wellenlängen in dem angegebenen Bereich sind denkbar, wenn sie mit geeigneten vorhandenen oder auch noch zu entwickelnden Photosensitizern kombiniert werden.

Gemäß einer Ausführungsform liegt die Energiedichte der Laserpulse auf der Oberfläche des zu bearbeitenden Gewebes bzw. des Photosensitizers in einem Bereich unterhalb von 7,5 J/cm². Je nach Wahl des Photosensitizers kann eine Energiedichte von 1,0 J/cm² oder auch darunter ausreichend für die Ablation sein.

Gemäß einer Ausführungsform liegt die Energie der Laserpulse in einem Bereich unterhalb von 100 µJ, wobei insbesondere ein Fokus des Bearbeitungs-Laserstrahls auf einer Oberfläche des Gewebes auf einen Fokusdurchmesser in einem Bereich zwischen 1 µm und 100 µm eingestellt ist. Der Bereich 1 µm bis 5 µm kann mit Hilfe spezieller Optiken erreicht werden.

Gemäß einer Ausführungsform ist eine Wiederholrate der Laserpulse in einem Bereich zwischen 1 Hz und 10 MHz eingestellt.

Gemäß einer Ausführungsform ist das Laserbearbeitungsgerät als ein dentales Laserbearbeitungsgerät zur Ablation oder Abtragung von Zahnmaterial, insbesondere kariösem Zahnmaterial, ausgebildet.

Gemäß einer Ausführungsform umfasst das Laserbearbeitungsgerät ferner ein mit der Laserstrahl-Ausrichteinheit verbundenes Fixiermittel zur räumlichen Fixierung eines distalen Endes der Laserstrahl-Ausrichteinheit in bezug auf einen Abschnitt des zu bearbeitenden Materials.

Gemäß einer Ausführungsform umfasst das Laserhandstück einen Aufsatz, der nicht nur als Fixiermittel dient, sondern auch den zu bearbeitenden Bereich derart ummantelt, dass gegebenenfalls zusammen mit einem integrierten Absaugkanalsystem verschiedene Prozessgase zuführbar sind, verschiedene chemische Zusammensetzungen und/oder verschiedene Druckverhältnisse generierbar sind. Im Falle einer Gewebs- oder Zahnbehandlung kann damit beispielsweise Quecksilber, etwa in der Form einer Amalgam-Füllung, ablatiert und abgesaugt werden.

Gemäß einer Ausführungsform umfasst das Laserbearbeitungsgerät ferner eine Strahlformungs-Einheit zur Formung eines im wesentlichen rechteckförmigen Strahlprofils des gepulsten Bearbeitungs-Laserstrahls.

Gemäß einer Ausführungsform umfasst das Laserbearbeitungsgerät ferner eine Scan-Einheit zum Abrastern oder Scannen eines Bereichs des Materials mit dem Bearbeitungs-Laserstrahl oder gegebenenfalls dem Diagnose-Laserstrahl. Dabei kann die Scan-Einheit insbesondere derart ausgelegt sein, dass ein von dem Fokus des Bearbeitungs-Laserstrahls erfasster Teilbereich von genau einem Laserpuls beaufschlagt wird. Beispielsweise kann die Scan-Einheit derart ausgelegt sein, dass einander benachbarte und von je einem Laserpuls erfasste Teilbereiche einen räumlichen Überlapp miteinander haben, dessen Fläche kleiner als die Hälfte eines Teilbereichs ist.

Gemäß einer Ausführungsform umfasst das Laserbearbeitungsgerät ferner eine Autofokus-Einheit zum Konstanthalten der räumlichen Lage des Fokus auf der Oberfläche des Materials.

Gemäß einer Ausführungsform umfasst das Laserbearbeitungsgerät ferner eine Detektions-Einheit zur Detektion des Vorhandenseins eines in dem Material oder in einer Umgebung davon erzeugten Signals und gegebenenfalls von dessen Signalstärke. Die Detektions-Einheit kann einen optischen Sensor aufweisen, welcher beispielsweise für die Erfassung einer zweiten oder höheren Harmonischen einer auf das Material eingestrahlten elektromagnetischen Strahlung ausgelegt ist. Die elektromagnetische Strahlung kann diejenige eines Diagnose-Laserstrahls sein, welcher von ein und derselben Laserstrahlquelle wie der Bearbeitungs-Laserstrahl erzeugt wird, oder sie kann diejenige einer inkohärenten und insbesondere kontinuierlich emittierenden Lichtquelle wie einer Lichtemissionsdiode (LED) sein.

Gemäß einer Ausführungsform kann das Laserbearbeitungsgerät eine Kontroll-Einheit aufweisen, welche dafür ausgelegt ist, die Laserstrahlquelle auf einen Bearbeitungsmodus oder einen Diagnosemodus einzustellen, wobei im Bearbeitungsmodus der gepulste Bearbeitungs-Laserstrahl erzeugt wird und im Diagnosemodus ein Diagnose-Laserstrahl erzeugt wird, welcher eine Energiedichte auf der Oberfläche des Materials aufweist, welche kleiner ist als die Energiedichte, welche zur Bearbeitung des Materials erforderlich ist. Dies kann im Prinzip der gleiche Laserstrahl wie der Bearbeitungs-Laserstrahl sein, der lediglich durch die Kontrolleinheit in seiner Energie derart geändert ist, dass die Energiedichte kleiner ist als die zur Bearbeitung notwendige Energiedichte. Gegebenenfalls kann anstelle der oder zusätzlich zu der Energie auch die Fokussierung in der Weise geändert werden, dass sich eine geringere Energiedichte ergibt. Dabei ist es die Aufgabe des Diagnose-Modus zu ermitteln um welches Material es sich handelt.

Gemäß einer Ausführungsform kann die Laserstrahl-Ausrichteinheit in der Form eines Handstücks vorgesehen sein, wobei die Ausgabeeinrichtung zur Ausgabe des Photosensitizers mindestens teilweise innerhalb des Handstücks angeordnet sein kann, wobei insbesondere ein Ende einer Zuleitung mit einer Düse in dem Handstück angeordnet sein kann. Innerhalb des Handstücks können auch zusätzlich die Scan-Einheit und/oder die Autofokus-Einheit angeordnet sein.

Gemäß einer Ausführungsform umfasst das Laserbearbeitungsgerät ferner eine weitere Ausgabeeinrichtung für die Ausgabe eines Markers, wobei die weitere Ausgabeeinrichtung insbesondere ebenfalls teilweise innerhalb des Handstücks angeordnet sein kann.

Gemäß einer Ausführungsform weisen die Laserpulse eine Halbwertsbreite in einem Bereich zwischen 100 fs und 1 ns auf, wobei dieser Bereich auch jeden inkrementellen Zwischenwert umfasst und das Inkrement 100 fs beträgt.

Gemäß einem weiteren Aspekt der vorliegenden Erfindung wird ein Laserbearbeitungsgerät zur Materialbearbeitung nach dem Verfahren gemäß dem zweiten Aspekt angegeben, wobei das Laserbearbeitungsgerät eine Laserstrahlquelle zum Bereitstellen eines gepulsten Bearbeitungs-Laserstrahls, eine Laserstrahl-Ausrichteinheit zur Auskopplung des Laserstrahls in Richtung auf einen zu bearbeitenden Bereich des Materials, und einen UV-Photodetektor zur Detektion von zur Detektion einer von einer Umgebung des bearbeiteten Bereichs emittierten ultravioletten Strahlung aufweist.

Weitere Ausführungsformen können bereitgestellt werden, indem Merkmale, die weiter oben im Zusammenhang mit dem ersten Aspekt dieser Erfindung beschrieben wurden, auf den hier relevanten weiteren Aspekt angewandt werden.

Im Folgenden wird die Erfindung in Form weiterer Ausführungsformen anhand der Zeichnungen näher erläutert. Es zeigen:
- Fig. 1: eine schematische Darstellung einer Ausführungsform eines Laserbearbeitungsgeräts;
- Fig. 2: eine schematische Darstellung einer weiteren Ausführungsform eines Laserbearbeitungsgeräts; und
- Fig. 3: eine schematische Darstellung einer Ausführungsform einer Laserstrahl-Ausrichteinheit;
- Fig. 4: eine schematische Darstellung einer Ausführungsform einer Laserstrahl-Ausrichteinheit;
- Fig. 5: eine schematische Darstellung einer Ausführungsform einer Laserstrahl-Ausrichteinheit
- Fig. 6: eine schematische Darstellung einer Ausführungsform einer Laserstrahl-Ausrichteinheit;
- Fig. 7: eine schematische Darstellung einer Ausführungsform einer Laserstrahl-Ausrichteinheit in einer Seitenansicht (A) und einer teilweisen Querschnittsansicht (B).

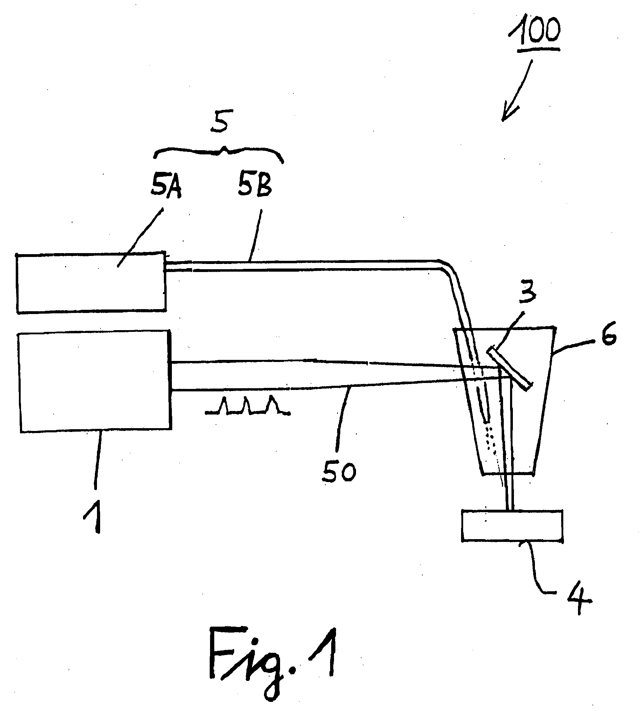

In der Fig. 1 ist eine allgemeine Ausführungsform eines Laserbearbeitungsgeräts gemäß dem ersten Aspekt schematisch und mit nicht maßstabsgetreuen Größenverhältnissen dargestellt. Das Laserbearbeitungsgerät 100 weist eine Laserstrahlquelle 1 auf, welche einen gepulsten Bearbeitungs-Laserstrahl 50 emittiert. Der Bearbeitungs-Laserstrahl 50 wird auf ein zu bearbeitendes Werkstück 4 fokussiert. Gegebenenfalls kann der Bearbeitungs-Laserstrahl vorher durch eine optische Umlenkeinheit 3 wie einen Spiegel, ein Spiegelsystem aus mehreren Spiegeln, eine Scaneinrichtung oder ein Umlenkprisma umgelenkt werden. Das Werkstück 4 kann wie eingangs erwähnt aus jedem beliebigen Material bestehen. Es kann sich dabei auch um einen Zahn eines Patienten oder um ein anderes biologisches Gewebe handeln.

Es kann dabei vorgesehen sein, dass die Laserstrahlquelle 1 die Laserpulse solchermaßen generiert, dass diese eine Pulsdauer in einem Bereich zwischen 100 fs und 1 ns und eine Energie pro Puls in einem Bereich unterhalb von 100 µJ aufweisen. Die Fokussierung des Laserstrahls kann derart eingestellt werden, dass der Bearbeitungs-Laserstrahl 50 auf der Oberfläche des Werkstücks 4 einen Fokus mit einem Fokusdurchmesser in einem Bereich von 1 µm bis 100 µm aufweist.

Es kann weiter vorgesehen sein, dass die Laserstrahlquelle 1 die Laserpulse mit einer Repetitionsrate in einem Bereich von 1 Hz bis 10 MHz emittiert.

Das Laserbearbeitungsgerät 100 weist ferner eine Ausgabeeinrichtung 5 zur Ausgabe eines Photosensitizers in Richtung auf eine Umgebung des zu bearbeitenden Bereichs des Werkstücks 4 auf. Die Ausgabeeinrichtung 5 kann wie dargestellt eine Vorratskammer 5A zur Bevorratung des Photosensitizers und eine damit verbundene Zuleitung 5B enthalten. Als Photosensitizer kann beispielsweise Erythrosin eingesetzt werden, welches durch Zwei-Photonen-Absorption der Laserstrahlung eines Nd:YAG-Lasers (1064 nm) oder durch Ein-Photonen-Absorption der frequenzverdoppelten Komponente des Nd:YAG-Lasers (532 nm) effizient angeregt werden kann. Als weitere Photosensitizer seien hier beispielhaft Methylen-Blau, Photofrin und metalloorganische Dendrimere genannt. Auch alle weiteren der einschlägigen Fachliteratur entnehmbaren Photosensitizer sowohl zukünftig noch zu entwickelnde Photosensitizer werden hiermit einbezogen, wobei stets das Absorptionsmaximum des Photosensitizers auf die Laserwellenlänge oder zumindest eine Umgebung davon abzustimmen ist. Photosensitizer im hier verstandenen Sinne können auch biochemische Chromophore sein. Von dem Begriff Photosensitizer sollen definitionsgemäß auch solche Stoffe umfasst sein, die keine Photosensitizer im fachterminologischen Sinne sind, jedoch unter definierten physikalisch-chemischen Bedingungen die für Photosensitizer typischen Eigenschaften annehmen können. Dazu zählen beispielsweise im Prinzip beliebige Gase oder Gasgemische (Luft) oder Aerosole, wobei davon auszugehen ist, dass für alle diese Substanzen gilt, dass sie nur unter definierten physikalisch-chemischen Eigenschaften Photosensitizer-Eigenschaften zeigen. Es kann auch ein solcher Photosensitizer gemäss der vorstehend wiedergegebenen Definition verwendet werden, der beim Aufbringen auf ein Substrat negativ geladen ist, also schon im nicht-angeregten Zustand als freier Ladungsträger wirkt bzw. freie Ladungsträger enthält, die dann einen zusätzlichen Beitrag zu den durch Absorption erzeugten freien Ladungsträgern bei der späteren Ablation leisten können. Es kann auch ein solcher Photosensitizer gemäss der vorstehend wiedergegebenen Definition verwendet werden, der als ein Cluster oder eine Zusammenballung von Klein-Ionen wie beispielsweise Luft-Ionen aufgebracht wird. Auch ein solcher Photosensitizer weist bereits im Ausgangszustand, d.h. im nicht-angeregten Zustand, freie Ladungsträger auf, die bei dem späteren Ablationsprozess unterstützende Wirkung entfalten können.

Das Laserbearbeitungsgerät 100 weist ferner eine Laserstrahl-Ausrichteinheit 6 zur Ausrichtung des Laserstrahls 50 in Richtung auf einen zu bearbeitenden Bereich des Werkstücks 4 auf. Die Ausrichteinheit 6 enthält in dem gezeigten Ausführungsbeispiel die Umlenk-Einheit 3 und ist des Weiteren mit der Zuleitung 5B der Ausgabeeinrichtung 5 verbunden, sodass an dem distalen Ende der Ausrichteinheit 6 der Photosensitizer aus der Zuleitung 5B austritt und in der gewünschten Weise auf den gewünschten Bereich des Werkstücks 4 aufgebracht werden kann.

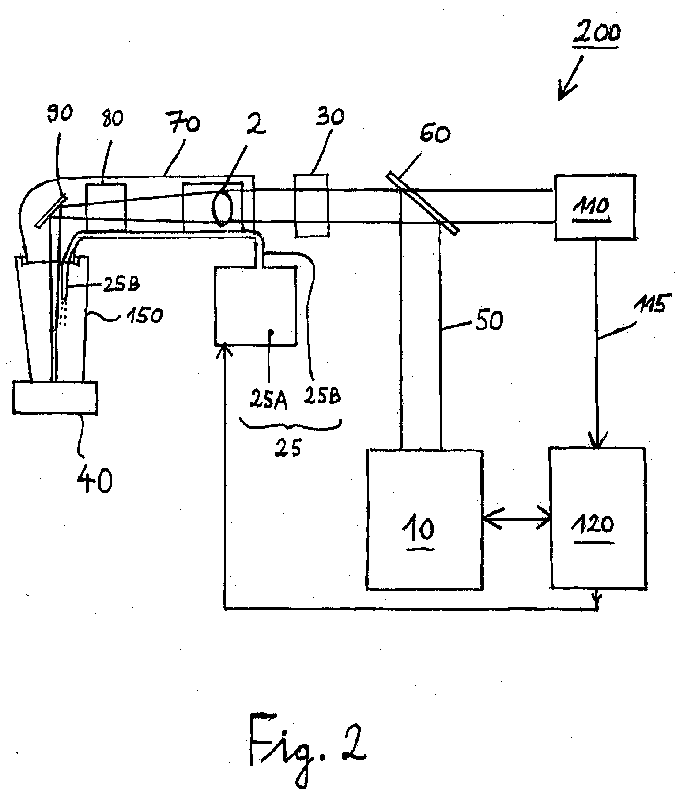

In der Fig. 2 ist eine weitere Ausführungsform eines Laserbearbeitungsgeräts schematisch und mit nicht maßstabgetreuen Größenverhältnissen dargestellt. Die in der Fig. 2 gezeigte Ausführungsform eines Laserbearbeitungsgeräts 200 umfasst eine Laserstrahlquelle 10, die einen gepulsten Bearbeitungs-Laserstrahl 50 emittiert. Die Laserstrahlquelle 10 ist in dem gezeigten Ausführungsbeispiel ein mit einem transienten oder einem regenerativen Verstärker gekoppelter Nd:YAG-Laser, welcher Laserpulse bei einer Wellenlänge von 1064 nm emittiert. Es kann hier auch eine andere Laserstrahlquelle wie beispielsweise ein Nd:YVO₄- oder ein Nd:GdVO₄-Laser oder ein Laser, der einen anderen Nd-dotierten Laserkristall enthält, verwendet werden. Ebenso kann ein kurzgepulster Yb-dotierter Laser, wie beispielsweise ein Yb:YAG- oder Yb:KYW-Laser, eingesetzt werden. Die Pulsdauer der Laserpulse beträgt 10 ps und die Wiederholrate der Laserpulse liegt in einem Bereich zwischen 1 Hz und 10 MHz. Die Energie der Laserpulse beträgt 40 µJ. Bei einer Repetitionsrate von 100 kHz beträgt die mittlere Strahlungsleistung 4 W.

Als Laserstrahlquelle kann im Prinzip auch jeder andere Laser verwendet werden. Die Laserstrahlquelle kann beispielsweise im Prinzip auch durch einen Diodenlaser oder ein Diodenlaser-Array gegeben sein, welches gegebenenfalls in besonders kompakter Weise im Handstück untergebracht sein kann. Insbesondere können die Ausgangspulse der Laserstrahlquelle ohne weitere optische Verstärkung verwendet, d.h. dem Handstück bzw. der Ausrichteinheit zugeführt werden.

Der von der Laserstrahlquelle 10 emittierte Bearbeitungs-Laserstrahl 50 trifft in seinem Strahlenverlauf bei der in der Fig. 2 gezeigten Ausführungsform auf eine optische Umlenkeinheit 60, die jedoch nur für die Wellenlänge des Bearbeitungs-Laserstrahls 50 als Umlenkeinheit wirkt, sodass der Bearbeitungs-Laserstrahl 50 um ca. 90° umgelenkt wird.

Im Strahlengang des Bearbeitungs-Laserstrahls 50 befindet sich anschließend eine Strahlformungs-Einheit 30, mit welcher ein rechteckförmiges oder Tophat-Strahlprofil erzeugt wird.

Anschließend tritt der Bearbeitungs-Laserstrahl 50 in eine als ein Handstück ausgebildete Laserstrahl-Ausrichteinheit 70 ein. Die Ausrichteinheit 70 enthält in ihrem eingangsseitigen Abschnitt eine Linse 2, die Teil einer Autofokus-Einheit 20 ist. Die Autofokus-Einheit 20 bewirkt mit an sich bekannten Mitteln, dass der von der Linse 2 erzeugte Fokus stets innerhalb der Ebene der bearbeiteten Oberfläche des Werkstücks 40 liegt. Die Autofokus-Einheit 20 kann insbesondere mit einer optischen Sensoreinrichtung zusammenwirken, welche eine von der Oberfläche des Werkstücks 40 zurückgeworfene Strahlung dahingehend auswertet, ob die Oberfläche noch im Fokus der Laserstrahlung liegt. Darauf hin wird ein Steuersignal an die Autofokus-Einheit 20 übermittelt, um eine geeignete Maßnahme zu ergreifen, so dass die Oberfläche des Werkstücks 40 wieder in den Fokus des Laserstrahls gelangt. Diese Maßnahme kann beispielsweise in einer Bewegung der Linse 2 vor oder zurück entlang des Ausbreitungsweges des Laserstrahls 50 bestehen. Dies kann durch einen schnellen Schrittmotor gewährleistet werden, der mit einem Schlitten verbunden ist, auf welchem die Linse 2 montiert ist. Es kann aber auch vorgesehen sein, dass die Linse 2 derart ausgestaltet ist, dass sich ihre Brechkraft verändern lässt.

Gemäß der Ausführungsform der Fig. 2 ist die Linse 2 derart angeordnet, dass sie auf der Oberfläche des Werkstücks 40 einen Fokus mit einem Fokusdurchmesser von 40 µm erzeugt. Bei einer Zahnbehandlung ergibt sich somit mit dem weiter oben genannten Wert für die Pulsenergie eines Laserpulses vorteilhafterweise eine Energiedichte von 3,18 J/cm², woraus sich wiederum eine Pulsspitzenintensität von 3,18 · 1011 W/cm² ergibt. Dies entspricht einer Photonen-Flussdichte von 1,18 · 10³⁰ Photonen cm⁻² · s⁻¹. Die elektrische Feldstärke des elektromagnetischen Wechselfeldes beträgt 1,55 · 10⁷ V/cm und die mittlere Oszillationsenergie der Elektronen im elektromagnetischen Wechselfeld beträgt 0,021 eV. Dies ist zwei Größenordnungen unterhalb typischer chemischer Bindungsenergien, d.h. das Laserfeld ist nicht stark genug, direkt mit atomaren Bindungskräften zu konkurrieren.

Es sei angemerkt, dass die Strahlformungseinheit 30 sich auch im Strahlengang hinter der Linse 2, also insbesondere auch im Handstück 70 befinden kann. Es kann auch vorgesehen sein, dass die Autofokuseinheit 20 und die Strahlformungseinheit 30, insbesondere die Linse 2 und die Strahlformungseinheit 30, zu einem gemeinsamen optischen Bauelement zusammengefasst werden.

In einem weiteren Abschnitt der Ausrichteinheit 70 ist eine Scan-Einheit 80 angeordnet, mit welcher der Bearbeitungs-Laserstrahl 50 oder ein Diagnose-Laserstrahl in ebenfalls an sich bekannter Weise, beispielsweise mittels zweier sich gegenüberstehender schwingender oder oszillierender Spiegel, über einen bestimmten Bereich der zu bearbeitenden Oberfläche des Werkstücks 40 gerastert oder gescannt werden kann. Mittels einer weiteren Umlenkeinheit 90, wie beispielsweise eines Umlenkprismas oder eines reflektierenden Spiegels wird dann der Bearbeitungs-Laserstrahl 50 oder ein Diagnose-Laserstrahl in Richtung auf das Werkstück 40 umgelenkt.

In dieser Ausführungsform ist also die Scan-Einheit 80 im Handstück angeordnet. Es sind jedoch auch andere Ausführungsformen denkbar, in denen die Scan-Einheit im Strahlengang vor dem Handstück, d.h. insbesondere innerhalb eines Spiegelgelenkarms oder am Eingang eines Spiegelgelenkarms der optischen Einrichtung vor dem Handstück angeordnet ist.

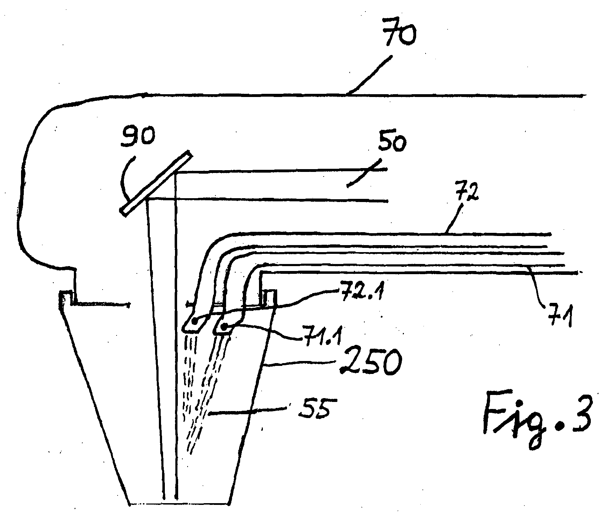

Die als ein Handstück ausgebildete Ausrichteinheit 70 kann bei der Bearbeitung entweder manuell oder von einer Robotik gehalten und auf das zu bearbeitende Werkstück 40 gerichtet werden. Um diese Art von Handhabung zu erleichtern und insbesondere um die Position und Ausrichtung des distalen Endes der Ausrichteinheit 70 in bezug auf das zu bearbeitende Werkstück 40 konstant zu halten, ist ein trichterförmiger Aufsatz 150 an dem distalen Ende der Ausrichteinheit 70 befestigt. Dieser kann die Funktion eines Fixierelements haben und kann während der Bearbeitung an dem Werkstück 40 geeignet fixiert werden, wie in Verbindung mit den Ausführungsformen der Fig. 3 bis Fig. 7 noch näher erläutert werden wird. Diese Art der Fixierung ist vorzugsweise bei einer medizinischen Behandlung vorgesehen, wenn es sich bei dem Werkstück 40 also beispielsweise um einen Zahn eines Patienten handelt. In diesem Fall kann vor Anbringen der Fixierung von dem behandelnden Arzt noch zusätzlich ein Kofferdam oder Spanngummi um den Zahn gelegt werden, um diesen von dem restlichen Mundraum zu trennen.

Auch bei einer (nicht-medizinischen) Bearbeitung eines Werkstücks 40 kann ein Fixierelement 150 vorgesehen sein. Dieses kann beispielsweise dazu dienen, dem zu bearbeitenden Werkstückbereich zusätzlich zu dem Photosensitizer bestimmte Prozessgase zuzuführen, eine gewünschte Atmosphäre einzustellen oder ablatiertes Material abzusaugen.

Der Aufsatz oder das Fixierelement 150 kann auch noch die weiteren Merkmale oder Eigenschaften einzeln oder in Kombination aufweisen. Er kann als wirksamer Blendschutz dienen, da bei einer Bearbeitung stets in der Nähe der Plasmaschwelle gearbeitet wird und dies im allgemeinen mit starker Lichterzeugung einhergeht, die den Operateur bei der Bedienung beeinträchtigen kann. Er kann weiterhin als ein UV-Strahlenreflektor dienen, wenn seine Innenwand entsprechend ausgebildet ist, so dass im Plasma erzeugtes UV-Licht effizient zu einem UV-Detektor geleitet werden kann. Er kann weiterhin so ausgebildet sein, dass er als ein Absorber freier Elektronen und/oder Ionen und/oder Radikale wirkt, um auch in dieser Hinsicht zu einem Höchstmass an Biosicherheit beizutragen. Er kann weiterhin aus einem flexiblen und anpassungsfähigen Material wie etwa Silikon gefertigt sein, um eine für seine Fixierung an jedweder Unterlage bestgeeignete Verformbarkeit bereitzustellen. Er kann weiterhin doppelwandig ausgeführt sein, wobei in dem Zwischenraum Kanäle zum Absaugen von ablatiertem Material (laser smoke) oder zum Erzeugen eines Vakuums im fixierten Zustand angeordnet sind. Dies kann so aussehen, dass die äussere Wand glatt und eben ist und die innere Wand eine geeignete Perforation zur Bildung der Kanäle aufweist.

Das Laserbearbeitungsgerät 200 weist ferner eine Ausgabeeinrichtung 25 zur Ausgabe eines Photosensitizers in Richtung auf eine Umgebung des zu bearbeitenden Bereichs des Werkstücks 40 auf. Die Ausgabeeinrichtung 25 enthält eine Vorratskammer 25A und einen daran angeschlossenen Zuführungsschlauch 25B, welcher in die Ausrichteinheit 70 einmündet und innerhalb der Ausrichteinheit 70 bis in das Fixierelement 150 geführt wird.

Die in dem bearbeiteten Bereich der Oberfläche des Werkstücks 40 oder in einer Umgebung davon erzeugten optischen oder akustischen Signale können detektiert und zu Diagnosezwecken verwendet werden. Bezüglich optischer Signale wurde bereits erläutert, dass diese beispielsweise bei einer Zahnbehandlung, insbesondere bei einer Kariesdiagnose, auf der zweiten (SHG, second harmonic generation) oder einer höheren Harmonischen von elektromagnetischer Strahlung beruhen, die auf das für eine Bearbeitung vorgesehene Zahnmaterial einwirkt. Das in der Fig. 2 gezeigte Ausführungsbeispiel soll im Folgenden anhand des Falls der Detektion eines SHG-Signals erläutert werden.

Bei dieser Art der Diagnose wird in der Laserstrahlquelle 10 ein Diagnose-Modus eingestellt, bei welchem ein Diagnose-Laserstrahl emittiert wird, dessen Energie oder Energiedichte unterhalb der Ablations- oder Plasma-Erzeugungsschwelle liegt, sodass mit diesem Laserstrahl keine Bearbeitung stattfinden kann. Mit dem Diagnose-Laserstrahl, welcher ebenso wie der Bearbeitungs-Laserstrahl gepulst ist, soll untersucht werden, ob ein zu bearbeitender Oberflächenbereich des Zahns gesundes oder kariöses Zahnmaterial enthält. Gesundes Zahnmaterial liefert ein höheres SHG-Signal als kariöses Material. Die solchermaßen an der Zahnoberfläche erzeugte frequenzverdoppelte Strahlung durchläuft in umgekehrter Richtung zumindest teilweise den Strahlengang des Bearbeitungs-Laserstrahls, wie er oben beschrieben worden ist, wird also von der Umlenkeinheit 90 umgelenkt, durchläuft die Scan-Einheit 80, die Autofokus-Einheit 20 mit der Linse 2 und trifft schließlich auf den Strahlteiler 60, der jedoch für die Wellenlänge des SHG-Signals durchlässig ist, sodass die frequenzverdoppelte Strahlung einer optischen Erfassungseinrichtung 110 zugeführt werden kann. Als optische Erfassungseinrichtung 110 kann ein einfacher Photodetektor vorgesehen sein, mit dem die Intensität der SHG-Strahlung gemessen wird. Es kann auch vorgesehen sein, dass als optische Erfassungseinrichtung 110 ein komplexeres System wie ein Spektrometer, eine CCD-Kamera oder ein CMOS-Bildsensor verwendet wird. Derartige optische Erfassungseinrichtungen können beispielsweise gleichzeitig dafür dienen, mit der Autofokus-Einheit 20, wie oben bereits angedeutet, in geeigneter Weise zusammenzuwirken.

Ebenso ist die Umlenkeinheit 90 so ausführbar, dass sie die an der Zahnoberfläche erzeugte frequenzverdoppelte Strahlung transmittiert und diese beispielsweise mit Hilfe einer Glasfaser, die sich hinter der Umlenkeinheit 90 befindet, zur optischen Erfassungseinrichtung 110 geleitet wird. Dadurch wird der Aufwand für den optischen Strahlengang zur Führung der frequenzverdoppelten Strahlung geringer, da die Optiken 80, 20, 60, 2 nicht für mehrere Wellenlängen ausgelegt und ggf. beschichtet sein müssen. Zur effizienteren Einkopplung des frequenzverdoppelten Lichts kann zwischen der Umlenkeinheit 90 und der Glasfaser eine Optik eingesetzt werden, die das frequenzverdoppelte Licht auf die Glasfaser fokussiert. Die Optik kann in Form einer Mikrooptik ausgeführt sein.

Die von der optischen Erfassungseinrichtung 110 ermittelten Werte für die SHG-Strahlung werden in ein Signal 115 umgewandelt und einer kombinierten Auswerte- und Steuereinheit 120 zugeführt, wobei es sich bei der Auswerte- und Steuereinheit 120 bei dieser Ausführungsform auch um ein Computersystem handeln kann. Es sind aber auch prinzipiell alle anderen Steuer- und Regelsysteme denkbar, wie z.B. SPS (speicherprogrammierbare Steuerungen), Mikro-Controller oder analoge Regelkreise.

Der Auswerte- und Steuereinheit 120 kann ein Signal von der Laserstrahlungsquelle 10 zugeführt werden, welches Daten über den Betriebszustand der Laserstrahlungsquelle 10 enthält. Die Auswerte- und Steuereinheit 120 gibt in Abhängigkeit von dem von der optischen Erfassungseinrichtung 110 übermittelten Signal 115 ein Steuersignal aus, welches der Laserstrahlungsquelle 10 zugeführt wird und die Laserstrahlungsquelle 10 beispielsweise von einem Ruhemodus in einen Bearbeitungsmodus schaltet.

Die in der Fig. 2 gezeigte Ausführungsform umfasst insbesondere eine Laserstrahlungsquelle 10, die zwischen den Betriebsarten "Aus" (Ruhemodus), "Diagnostik" und "Therapie" (Bearbeitung) umschalten kann. In dieser Ausführungsform emittiert die Laserstrahlquelle 10 sowohl den Bearbeitungs-Laserstrahl während dem "Therapie"-Modus als auch unter geänderten Bedingungen den Diagnose-Laserstrahl während dem "Diagnostik"-Modus. Der Unterschied zwischen dem Diagnostik- und dem Therapie-Modus ist im wesentlichen die Pulsspitzenintensität in W/cm², die auf die Zahnoberfläche appliziert wird. Im Diagnose-Modus muss die Energiedichte sicher unterhalb der Ablations-Schwelle sein, während sie im Therapie-Modus darüber liegt.

In dem vorstehend beschriebenen Diagnosemodus kann beispielsweise ein bestimmter Oberflächenbereich des Zahns 40 mit dem Diagnose-Laserstrahl gescannt werden und das rückgestreute SHG-Signal empfangen und ausgewertet werden. Auf dieser Basis kann gewissermaßen der Oberflächenbereich kartiert werden, wobei ein zu bearbeitender oder zu ablatierender Oberflächenabschnitt identifiziert wird. Die Auswerte- und Steuereinheit 120 gibt nach Durchführung des Diagnosemodus ein Signal an die Ausgabeeinrichtung 25, woraufhin die Ausgabeeinrichtung 25 mittels des Zuleitungskanals 25B und der an dessen Ende montierten steuerbaren Düse den zu ablatierenden Bereich der Zahnoberfläche mit dem Photosensitizer beaufschlagt.

Bei einer (nicht-medizinischen) Werkstückbearbeitung kann in ähnlicher Weise eine Diagnose durchgeführt werden, indem ein durch einen Diagnose-Laserstrahl ausgelöstes rückgestreutes Signal empfangen und ausgewertet wird. Dieses rückgestreute Signal kann ausser einem SHG-Signal auch ein reflektiertes Signal, ein Fluoreszenzsignal oder ein Wärmesignal sein. Es kann aber auch alternativ hierzu eine rein lichtoptische Betrachtung einer Werkstückoberfläche durchgeführt werden und gegebenenfalls unter Zuhilfenahme von Bilderkennungsverfahren entschieden werden, ob ein bestimmter Oberflächenbereich des Werkstücks mit dem Bearbeitungs-Laserstrahl zu bearbeiten ist oder nicht.

In der Fig. 3 ist eine Ausrichteinheit 70 in der Form eines Handstücks in einem Querschnitt zur Illustration eines weiteren Ausführungsbeispiels für eine Diagnose dargestellt. In diesem Ausführungsbeispiel wird die Unterscheidung zwischen nicht zu bearbeitendem und zu bearbeitendem Material nicht anhand eines optischen Signals wie eines SHG-Signals vorgenommen sondern anhand eines Markers, welcher in Kontakt mit dem zu bearbeitendem Material eine charakteristische Färbung annimmt. Dieser Marker kann durch eine weitere Zuleitung 72, welche ebenfalls innerhalb des Handstücks verläuft, dem Werkstück zugeführt werden. Nachdem auf solche Weise - vorzugsweise durch eine optische Aufnahme und anschließende Bildauswertung - festgestellt wurde, welche Bereiche einer Werkstückoberfläche zu bearbeiten sind, werden diese Bereiche mit dem Photosensitizer, der über die Zuleitung 71 dem Werkstück zugeführt wird, beaufschlagt und können anschließend mit dem Bearbeitungs-Laserstrahl 50 bearbeitet bzw. ablatiert werden. In dieser Ausführungsform wird demgemäss kein Diagnose-Laserstrahl und keine Umschaltbarkeit der Laserstrahlquelle und ebenso keine Detektion eines optischen Signals wie eines SHG-Signals benötigt. Mit beiden Zuleitungen 71 und 72 können steuer- und ausrichtbare Düsen 71.1 bzw. 72.1 verbunden sein, mit denen die Materialien zielgerichtet auf die Werkstückoberfläche aufgebracht werden können. Im Falle einer Zahnbehandlung kann mit dem Marker beispielsweise eine Unterscheidung zwischen gesundem (nicht zu bearbeitendem) und kariösem (zu bearbeitendem) Zahnmaterial sichtbar gemacht werden.

Es sei angemerkt, dass die in der Fig. 3 dargestellte Ausführungsform einer Laserstrahl-Ausrichteinheit als eigenständige Erfindung angesehen werden kann. Diese Laserstrahl-Ausrichteinheit weist ein Handstück 70, eine Umlenkeinheit 90 zur Umlenkung eines Bearbeitungs-Laserstrahls 50 und/oder gegebenenfalls eines Diagnose-Laserstrahls, und einen Aufsatz 250 zur Fixierung des Handstücks 70 an einer Umgebung des zu bearbeitenden Materials auf, wobei das Handstück 70 so ausgebildet ist, dass durch eine in seinem Innenraum verlaufende Zuleitung 71 ein Photosensitizer und gegebenenfalls durch eine weitere Zuleitung 72 ein Marker auf einen zu bearbeitenden oder zu diagnostizierenden Werkstückbereich auftragbar ist. Diese eigenständige Erfindung kann auch mit jeder der in dieser Anmeldung beschriebenen anderen Ausführungsformen kombiniert werden und/oder mit jedem der in dieser Anmeldung beschriebenen Merkmale weitergebildet werden. Davon umfasst sind auch übergeordnete Einheiten wie ein Laserbearbeitungsgerät, welches eine Laserstrahl-Ausrichteinheit wie vorstehend beschrieben enthält.

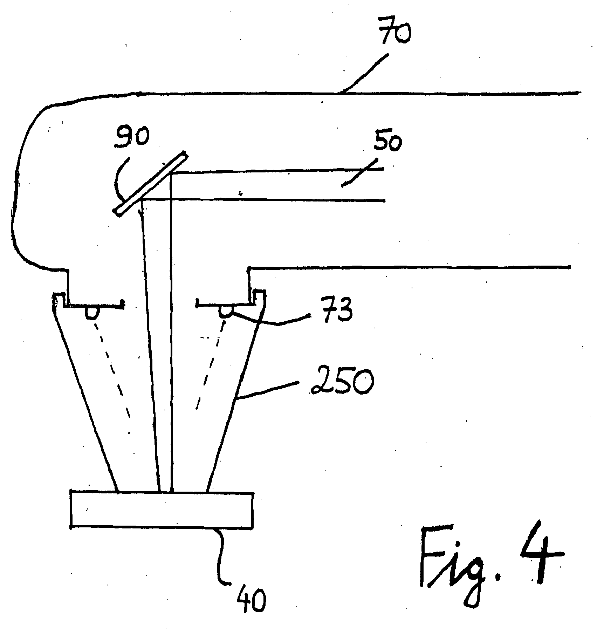

In der Fig. 4 ist eine Ausrichteinheit 70 in der Form eines Handstücks in einem Querschnitt zur Illustration eines weiteren Ausführungsbeispiels dargestellt. Bei diesem Ausführungsbeispiel ist im Innenraum des Handstücks 70 mindestens eine Laser- oder Lichtemissionsdiode (LED) 73 angeordnet. Es können auch, wie in Fig. 4 gezeigt, mehrere LEDs 73 vorhanden sein. Diese LEDs 73 können dazu dienen, im noch nicht fixierten Zustand des Aufsatzes 250 das Werkstück auszuleuchten und es somit insbesondere zu ermöglichen, den Aufsatz 250 relativ zu dem zu behandelnden Oberflächenbereich des Werkstücks 40 optimal zu positionieren. Darüber hinaus können sie dazu dienen, einen auf der zu behandelnden Oberfläche des Werkstücks 40 aufgebrachten Marker anzuregen, so dass dieser an zu behandelnden, eine charakteristische Färbung annimmt. Das solchermaßen von dem Marker erzeugte Bild kann mit derselben Optik erfasst werden, die für die Einkopplung des Bearbeitungs-Laserstrahls 50 verwendet wird, und kann ausgewertet werden. In einem nächsten Schritt kann dann auf der Basis dieser Auswertung der Photosensitizer auf den zu bearbeitenden bzw. zu ablatierenden Stellen aufgebracht werden. Die LEDs 73 können beispielsweise wie dargestellt auf einem horizontalen Endabschnitt des Handstücks 70 angeordnet und ihre räumliche Anordnung kann beispielsweise kreisförmig sein, so dass eine möglichst homogene und rotationssymmetrische Ausleuchtung erzielt werden kann. Die LEDs 73 sind mit elektrischen Zuleitungen (nicht dargestellt) verbunden, die innerhalb des Handstücks 70 geführt sind und durch die die LEDs 73 mit elektrischer Leistung versorgt werden. Die LEDs 73 können einfarbige, also quasi-monochromatische LEDs wie beispielsweise rotes Licht emittierende LEDs sein. Vorteilhaft könnte jedoch sein, Weisslicht-LEDs zu verwenden, da hiermit zum einen das Werkstück besser ausgeleuchtet wird und zum anderen unter Umständen damit eine größere Auswahl an mit verschiedenen Wellenlängen anregbaren Markern zu Verfügung steht. Es können beispielsweise eine oder mehrere Weisslicht-LEDs und eine rot emittierende Laserdiode als Pointer eingesetzt werden.

Es sei angemerkt, dass die in der Fig. 4 dargestellte Ausführungsform einer Laserstrahl-Ausrichteinheit als eigenständige Erfindung angesehen werden kann. Diese Laserstrahl-Ausrichteinheit weist ein Handstück 70, eine Umlenkeinheit 90 zur Umlenkung eines Bearbeitungs-Laserstrahls 50 und/oder gegebenenfalls eines Diagnose-Laserstrahls, einen Aufsatz 250 zur Fixierung des Handstücks 70 an einer Umgebung des zu bearbeitenden Werkstücks und mindestens eine LED 73 zur Ausleuchtung und/oder zur Anregung eines Markers oder Photosensitizers auf. Diese eigenständige Erfindung kann auch mit jeder der in dieser Anmeldung beschriebenen anderen Ausführungsformen kombiniert werden und/oder mit jedem der in dieser Anmeldung beschriebenen Merkmale weitergebildet werden. Davon umfasst sind auch übergeordnete Einheiten wie ein Laserbearbeitungsgerät, welches eine Laserstrahl-Ausrichteinheit wie vorstehend beschrieben enthält.

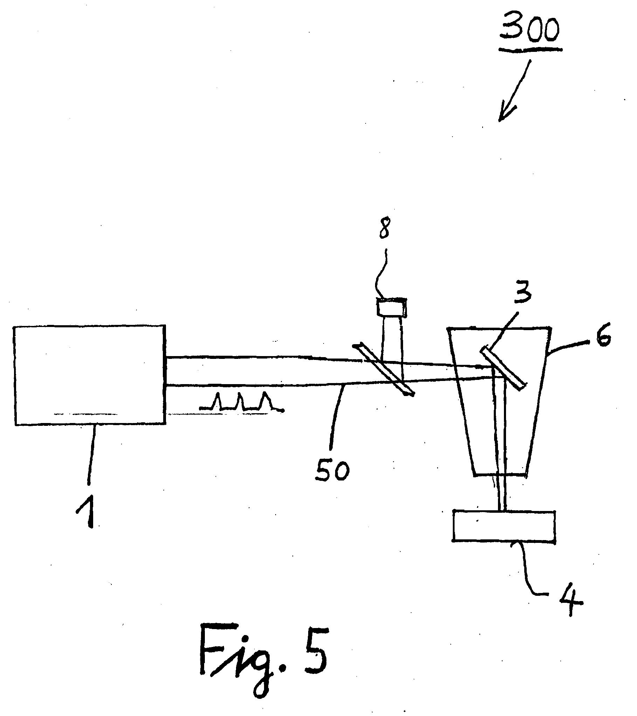

In der Fig. 5 ist eine weitere allgemeine Ausführungsform eines Laserbearbeitungsgeräts gemäß dem zweiten Aspekt schematisch und mit nicht maßstabsgetreuen Größenverhältnissen dargestellt. Das Laserbearbeitungsgerät 300 weist eine Laserstrahlquelle 1 auf, welche einen gepulsten Bearbeitungs-Laserstrahl 50 emittiert. Der Bearbeitungs-Laserstrahl 50 wird auf ein zu bearbeitendes Werkstück 4 fokussiert. Gegebenenfalls kann der Bearbeitungs-Laserstrahl 50 vorher durch eine optische Umlenkeinheit 3 wie einen Spiegel, ein Spiegelsystem aus mehreren Spiegeln, eine Scaneinrichtung oder ein Umlenkprisma umgelenkt werden. Das Werkstück 4 kann wie eingangs erwähnt aus jedem beliebigen Material bestehen. Es kann sich dabei auch um einen Zahn eines Patienten oder um ein anderes biologisches Gewebe handeln. Das Laserbearbeitungsgerät 300 weist ferner einen UV-Detektor 8 auf, mit welchem UV-Strahlung detektiert werden kann, die von dem bearbeiteten Werkstück 4 während der Bearbeitung mit dem Bearbeitungs-Laserstrahl 50 erzeugt wurde. Der UV-Detektor 8 kann mit einer Auswerte- und Steuereinheit (nicht dargestellt) gekoppelt sein, welche ihrerseits mit der Laserstrahlquelle 1 gekoppelt ist. In der Auswerte- und Steuereinheit wird das Signal des UV-Detektors 8 ausgewertet und auf der Basis der Auswertung wird entschieden, ob und in welcher Weise die von der Laserstrahlquelle 1 emittierte Laserstrahlung verändert wird.

Anstelle eines einzigen UV-Detektors 8 können auch mehrere UV-Detektoren eingesetzt werden, insbesondere wenn mehrere verschiedene Charakteristika der UV-Strahlung bestimmt werden sollen und dies mit nur einem UV-Detektor ohne Weiteres nicht möglich ist. So ist beispielsweise denkbar, mit einem ersten UV-Detektor die Strahlendosis, mit einem zweiten UV-Detektor den Spektralbereich oder die Wellenlänge und mit einem dritten UV-Detektor den dermatologischen UV-Index zu bestimmen. Einzelne oder alle dieser UV-Detektoren können auch als schnelle oder ultraschnelle UV-Detektoren ausgebildet sein, die insbesondere eine Ansprechgeschwindigkeit im Pikosekundenbereich aufweisen.

Das Laserbearbeitungsgerät 300 kann ferner eine Laserstrahl-Ausrichteinheit 6 zur Ausrichtung des Laserstrahls 50 in Richtung auf einen zu bearbeitenden Bereich des Werkstücks 4 aufweisen. Die Ausrichteinheit 6 enthält in dem gezeigten Ausführungsbeispiel die Umlenk-Einheit 3 und kann im übrigen wie die in dieser Anmeldung gezeigten Ausführungsformen von Ausrichteinheiten ausgebildet sein. Insbesondere kann die Ausrichteinheit 6 an ihrer Innenwand eine UV-reflektierende Beschichtung aufweisen. Mittels dieser Beschichtung kann die an der bearbeiteten Stelle entstehende UV-Strahlung effizient in Richtung auf den UV-Detektor 8 weitergeleitet werden. Die Beschichtung kann weiterhin so ausgestaltet sein, dass sie als Absorber freier Ionen und/oder Elektronen und/oder Radikale dienen kann. Ebenso kann der Spiegel 3 derart beschichtet sein, dass er den Bearbeitungs-Laserstrahl 50 reflektiert, aber die zu vermessende UV-Strahlung transmittiert. Der Detektor 8 kann sich dann hinter dem Spiegel 3 befinden.

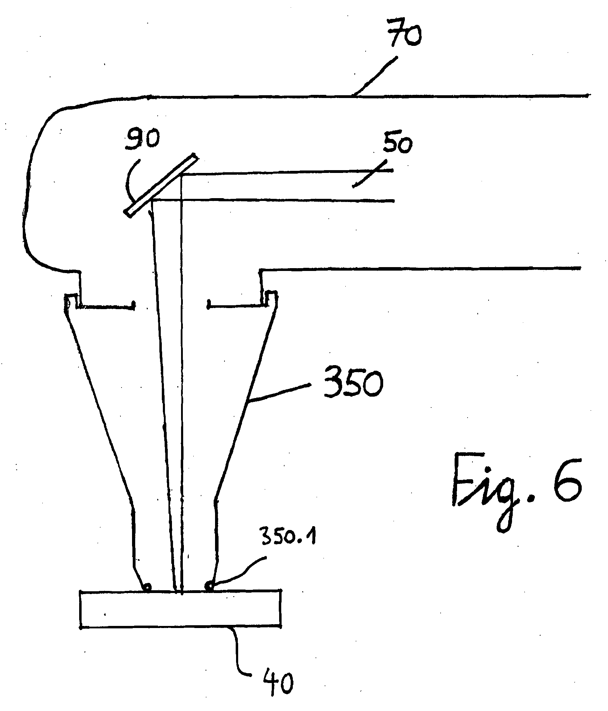

In der Fig. 6 ist eine Ausrichteinheit 70 in der Form eines Handstücks in einem Querschnitt zur Illustration eines weiteren Ausführungsbeispiels dargestellt. In diesem Ausführungsbeispiel ist das Handstück 70 mit einem Aufsatz 350 versehen, dessen Funktion darin besteht, das Handstück 70 nicht nur zu fixieren, sondern darüber hinaus den zu behandelnden Oberflächenbereich des Werkstücks 40 einzukapseln, wie hier durch eine an einem unteren Randabschnitt des Aufsatzes 350 angebrachte Dichtung 350.1 lediglich symbolhaft und nicht notwendigerweise technisch realistisch angedeutet werden soll. Ein Ziel einer derartigen gekapselten Fixierung besteht jedenfalls darin, eine unmittelbare Umgebung des zu behandelnden Oberflächenbereichs des Werkstücks 40 möglichst weitgehend, d.h. insbesondere luft- und gasdicht gegenüber der Umgehung abzuschließen. Eine gekapselte Fixierung dieser Art schafft die Möglichkeit, die Bearbeitung, insbesondere im Fall einer Zahnbehandlung, auf verschiedenste Weise zu optimieren, wie in nachfolgenden Ausführungsbeispielen noch erörtert werden wird. Beispielsweise kann innerhalb des Handstücks 70 eine Absaugeinrichtung vorgesehen sein, durch die infolge der nach außen dichtenden Fixierung ablatiertes Material besonders effizient und sicher abgesaugt werden kann. Des Weiteren kann eine kontrollierte Atmosphäre um den bearbeiteten Oberflächenbereich geschaffen werden.

Es sei angemerkt, dass die in der Fig. 6 dargestellte Ausführungsform einer Laserstrahl-Ausrichteinheit als eigenständige Erfindung angesehen werden kann. Diese Laserstrahl-Ausrichteinheit weist ein Handstück 70, eine Umlenkeinheit 90 zur Umlenkung eines Bearbeitungs-Laserstrahls 50 und/oder gegebenenfalls eines Diagnose-Laserstrahls, einen Aufsatz 350 zur Fixierung des Handstücks 70 an einer Umgebung des zu bearbeitenden Werkstücks auf, wobei der Aufsatz 350 so ausgebildet ist, dass er einen zu bearbeitenden Oberflächenbereich dicht umschließen kann. Diese eigenständige Erfindung kann auch mit jeder der in dieser Anmeldung beschriebenen anderen Ausführungsformen kombiniert werden und/oder mit jedem der in dieser Anmeldung beschriebenen Merkmale weitergebildet werden. Davon umfasst sind auch übergeordnete Einheiten wie ein Laserbearbeitungsgerät, welches eine Laserstrahl-Ausrichteinheit wie vorstehend beschrieben enthält.

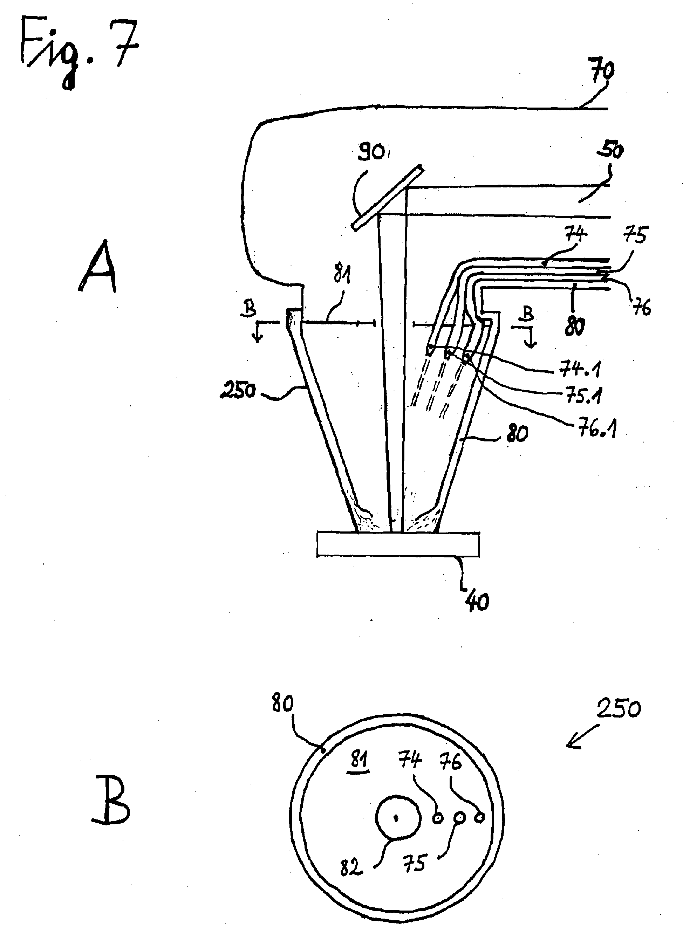

In der Fig. 7 ist ein weiteres Ausführungsbeispiel einer Ausrichteinheit 70 in der Form eines Handstücks in einem Längsschnitt (A) und in einem Querschnitt in einer Linie B-B (B) zur Illustration dargestellt. Bei diesem Ausführungsbeispiel ist auf das Handstück 70 ein Aufsatz 250 aufgesetzt und Handstück 70 und Aufsatz 250 sind derart ausgestaltet, dass darin ein Absaugkanal 80 aufgenommen ist, durch den bei der Bearbeitung des Werkstücks ablatiertes Material effizient abgesaugt werden kann. Der Absaugkanal 80 ist im Bereich des Aufsatzes 250 dadurch geformt, dass die Aussenwand des Aufsatzes 250 als eine Doppelwand geformt ist, wobei die innere Wand unten offen ist und Ablationsprodukte in den über den gesamten Kreisumfang in sich geschlossenen Zwischenraum zwischen den Wänden gesaugt werden. Am oberen Ende ist dieser Zwischenraum mit einer einzelnen Leitung 80 verbunden, die im Inneren des Handstücks 70 nach aussen geführt und an ein Absaugsystem angeschlossen ist. Die untere Öffnung des Zwischenraums ist in Richtung auf den bearbeiteten Bereich aufgeweitet, so dass ablatiertes Material effizient und richtungsunabhängig abgesaugt werden kann. Es kann auch vorgesehen sein, dass die innere Wand in einer Weise perforiert ist, dass in dem Zwischenraum der beiden Wände nur einzelne schmale Absaugkanäle gebildet sind, die dann oben zu einem einzelnen nach aussen führenden Absaugkanal 80 zusammengefasst werden.

Insbesondere für Anwendung bei Zahnbehandlungen kann auch noch an geeigneter Position - vorzugsweise im unteren Bereich - ein Thermosensor angebracht werden, der die Oberflächentemperatur des bearbeiteten Bereichs misst. Insbesondere wenn die Temperatur einen Wert von 42,5°C überschreitet sollte der Sensor ein Warnsignal ausgeben, da dies den Beginn einer Kollagenfaserschädigung und den sogenannten "first pain" anzeigen kann.

Das Handstück 70 und der Aufsatz 250 sind ferner so ausgebildet, dass weitere Zuleitungen vorhanden sind, durch die weitere Substanzen in Richtung auf das zu bearbeitende Werkstück 40 geleitet werden können. Der Aufsatz 250 weist an seinem oberen Ende eine Abschlussplatte 81 auf, die eine Anzahl Öffnungen enthält. In einer zentralen kreisrunden Öffnung ist ein lichtdurchlässiges Schutzglas 82 für den Durchtritt des Laserstrahls 50 befestigt. Das Schutzglas 82 ist vorzugsweise UV-transparent, so dass die durch die Bearbeitung entstehende UV-Strahlung hindurchtreten kann und der bereits beschriebenen Weise durch einen UV-Detektor detektiert werden kann. Das Schutzglas 82 kann beispielsweise aus synthetischem Diamant bestehen, der mittels eines CVD (chemical vapor deposition)-Verfahrens hergestellt wurde. In diesem Fall wäre das Schutzglas auch für den gesamten sichtbaren Spektralbereich und für den Infrarotbereich transparent, so dass auch elektromagnetische Strahlung aus einem dieser Spektralbereiche als Mess-Signal verwendet werden kann.

In der Abschlussplatte 81 sind weitere Öffnungen für Zuleitungen 74, 75 und 76 vorhanden. Die Zuleitungen 74, 75 und 76 sind jeweils mit Düsen 74.1, 75.1 und 76.1 verbunden, durch die die entsprechenden Substanzen auf das Werkstück befördert werden können. In einer ersten, innen liegenden Zuleitung 74 kann beispielsweise ein Photosensitizer und/oder Marker zugeleitet werden. In einer weiter aussen liegenden Zuleitung kann ein Pigment zugeleitet werden. Ein derartiges Pigment kann als ein Strahlenschutz vor UV-Strahlung und/oder Blaulicht eingesetzt werden. Beispielsweise zeichnet sich ein Pigment wie Melanin als ein geeigneter UV- und Blaulichtabsorber aus. Schliesslich kann in einer aussen liegenden Zuleitung ein Kühlmittel wie Luft oder Wasser zugeleitet werden. Die Düsen 74.1, 75.1 und 76.1 sind vorzugsweise steuerbare, ausrichtbare und fokussierbare Düsen, mit denen die jeweiligen Substanzen räumlich gezielt und fokussiert appliziert werden können. Sie können beispielsweise durch an sich bekannte Kugelkopf-Düsen gebildet sein. Durch die Fokussierbarkeit kann erreicht werden, dass die Interaktion zwischen dem Laserstrahl, dem Photosensitizer und dem Substrat stets nur im Fokus, d.h. exakt auf der Oberfläche stattfindet und somit der Laserstrahl nicht nur mit dem Sensitizer oder nur mit Luft reagiert, so dass es im ungünstigen Fall zu einem Luftdurchbruch kommen kann. Durch die Düsen können die genannten Substanzen des Weiteren mit variablen Austrittsgeschwindigkeiten auf das Werkstück appliziert werden, so dass auf diese Weise auch ein Energiebeitrag zusätzlich zu der Photonenenergie geliefert werden kann. Insbesondere die in den Fig. 7A,B gezeigte Geometrie und Anordnung der verschiedenen Düsen ermöglicht und erleichtert die Bereitstellung einer kontrollierten Atmosphäre innerhalb des Fixierelements.

## Patentansprüche

1. Verfahren zur Ablation eines Materials, ausgenommen eines Gewebes, Quecksilber und Amalgam-Füllungen, bei welchem in einem Bearbeitungs-Modus ein gepulster Bearbeitungs-Laserstrahl bereitgestellt wird,
ein Photosensitizer in eine räumliche Umgebung eines zu ablatierenden Bereiches eines Materials gebracht wird, und der Photosensitizer mit dem gepulsten Bearbeitungs-Laserstrahl gestrahlt wird, wobei,
Intensität und Wellenlänge des Bearbeitungs-Laserstrahls derart gewählt werden, dass bei der Absorption des Bearbeitungs-Laserstrahls durch den Photosensitizer dieser in einen angeregten Zustand übergeht und der angeregte Photosensitizer direkt mit dem Material reagiert und dadurch die Ablation des Materials bewirkt.

2. Verfahren nach Anspruch 1, bei welchem
eine von einer Umgebung des ablatierten Bereichs emittierte elektromagnetische Strahlung detektiert wird, und
der gepulste Bearbeitungs-Laserstrahl in Abhängigkeit von der detektierten elektromagnetischen Strahlung eingestellt wird.

3. Verfahren nach den Ansprüchen 1 oder 2, bei welchem der gepulste Laserstrahl derart eingestellt wird, dass mindestens eine der folgenden Bedingungen erfüllt ist:
die Temperatur eines mit dem Bearbeitungs-Laserstrahl erzeugten Plasmas beträgt maximal 11604.5 K, entsprechend 1 eV, die mittlere Oszillationsenergie der Elektronen im elektromagnetischen Wechselfeld des Bearbeitungs-Laserstrahls liegt unterhalb 0,021 eV.

4. Verfahren nach den Ansprüchen 2 und 3, bei welchem der gepulste Bearbeitungs-Laserstrahl anfänglich aufgrund von Berechnungen eingestellt wird, so dass mindestens eine der Bedingungen erfüllt ist, und
im laufenden Betrieb der Bearbeitung der Bearbeitungs-Laserstrahl in Abhängigkeit von der detektierten elektromagnetischen Strahlung eingestellt wird.

5. Verfahren nach einem der vorhergehenden Ansprüche, bei welchem
der Photosensitizer und die Wellenlänge des Laserstrahls derart ausgewählt werden, dass der Bearbeitungs-Laserstrahl in dem Photosensitizer durch eine Ein-Photonen-Absorption mindestens teilweise absorbiert wird, wobei die Absorption in der Nähe eines Absorptions-Maximums des Photosensitizers liegt.

6. Verfahren nach einem der vorhergehenden Ansprüche, bei welchem
der Photosensitizer und die Wellenlänge des Laserstrahls derart ausgewählt werden, dass der Bearbeitungs-Laserstrahl in dem Photosensitizer durch eine N-Photonen-Absorption mit N ≥ 2 mindestens teilweise absorbiert wird, wobei die Absorption in der Nähe eines Absorptions-Maximums des Photosensitizers liegt.

7. Verfahren nach einem der vorhergehenden Ansprüche, bei welchem
eine Wiederholrate der Laserpulse in einem Bereich zwischen 1 Hz und 10 MHz eingestellt wird.

8. Verfahren nach einem der vorhergehenden Ansprüche, bei welchem
der Bearbeitungs-Laserstrahl ein im wesentlichen rechteckförmiges Strahlprofil aufweist.

9. Laserablationsgerät zur Ablation eines Materials, umfassend:
eine Laserstrahlquelle (1; 10) zum Bereitstellen eines gepulsten Bearbeitungs-Laserstrahls (50),
eine Laserstrahl-Ausrichteinheit (6; 70) zur Auskopplung des Laserstrahls (50) in Richtung auf einen zu ablatierenden Bereich des Materials, und
eine Ausgabeeinrichtung (5; 25) zur Ausgabe eines Photosensitizers in Richtung auf eine Umgebung des zu ablatierenden Bereichs des Materials, wobei die Ausgabeeinrichtung (5; 25) insbesondere mit der Laserstrahl-Ausrichteinheit (6; 70) verbunden ist,
**gekennzeichnet durch**
einen UV-Detektor (8) zur Detektion einer von einer Umgebung des ablatierten Bereichs emittierten UV-Strahlung, wobei die Laserstrahl-Ausrichteinheit (6) an ihrer Innenwand eine UV-reflektierende Beschichtung aufweist, mittels der die von dem ablatierten Bereich emittierte UV-Strahlung in Richtung auf den UV-Detektor (8) weitergeleitet wird.

10. Laserablationsgerät nach Anspruch 9, bei welchem die Laserpulse eine zeitliche Halbwertsbreite in einem Bereich zwischen 100 fs und 1 ns aufweisen.

11. Laserablationsgerät nach einem der Ansprüche 9 bis 10, bei welchem
eine Wiederholrate der Laserpulse in einem Bereich zwischen 1 Hz und 10 MHz einstellbar ist.

12. Laserablationsgerät nach einem der Ansprüche 9 bis 11, bei welchem
die Wellenlänge der Laserpulse und das Material des Photosensitizers derart ausgewählt sind, dass der Bearbeitungs-Laserstrahl durch eine Ein-Photonen-Absorption in dem Photosensitizer mindestens teilweise absorbiert wird, wobei die Absorption in der Nähe eines Absorptions-Maximums des Photosensitizers liegt.

13. Laserablationsgerät nach einem der Ansprüche 9 bis 12, bei welchem
die Wellenlängen der Laserpulse und das Material des Photosensitizers derart ausgewählt sind, dass der Bearbeitungs-Laserstrahl durch eine N-Photonen-Absorption mit N ≥ 2 in dem Photosensitizer mindestens teilweise absorbiert wird, wobei die Absorption in der Nähe eines Absorptions-Maximums des Photo-sensitizers liegt.

14. Laserablationsgerät nach einem der Ansprüche 9 bis 13, ferner umfassend:
ein mit der Laserstrahl-Ausrichteinheit (6; 70) verbundenes Fixiermittel (150) zur räumlichen Fixierung eines distalen Endes der Laserstrahl-Ausrichteinheit (6; 70) in Bezug auf einen Abschnitt des zu ablatierenden Materials.

## Claims

1. Method for the ablation of a material, with the exception of a tissue, mercury and amalgam fillings, in which in a processing mode, a pulsed processing laser beam is provided, a photosensitizer is brought into an area surrounding a region of a material that is to be ablated, and the photosensitizer is irradiated by the pulsed processing laser beam, wherein
intensity and wavelength of the processing laser beam are selected in such a way that, when the processing laser beam is absorbed by the photosensitizer, the latter transitions into an excited state and the excited photosensitizer directly reacts with the material and thereby causes the ablation of the material.

2. Method according to Claim 1, in which
electromagnetic radiation emitted from surroundings of the ablated region is detected, and
the pulsed processing laser beam is set depending on the detected electromagnetic radiation.

3. Method according to Claim 1 or 2, in which the pulsed laser beam is set such that at least one of the following conditions is met:
the temperature of plasma generated by the processing laser beam is no more than 11604.5 K, which corresponds to 1 eV, the mean oscillation energy of the electrons in the alternating electromagnetic field of the processing laser beam is below 0.021 eV.

4. Method according to Claims 2 and 3, in which
the pulsed processing laser beam is initially set on the basis of calculations such that at least one of the conditions is satisfied, and
the processing laser beam is set, during the running processing operation, depending on the detected electromagnetic radiation.

5. Method according to one of the preceding claims, in which the photosensitizer and the wavelength of the laser beam are selected in such a way that the processing laser beam is absorbed at least partially in the photosensitizer by a single photon absorption, the absorption being in the vicinity of an absorption maximum of the photosensitizer.

6. Method according to one of the preceding claims, in which
the photosensitizer and the wavelength of the laser beam are selected in such a way that the processing laser beam is absorbed at least partially in the photosensitizer by an N photon absorption, with N ≥ 2, the absorption being in the vicinity of an absorption maximum of the photosensitizer.

7. Method according to one of the preceding claims, in which
a repetition rate of the laser pulses is set in a range between 1 Hz and 10 MHz.

8. Method according to one of the preceding claims, in which
the processing laser beam has a substantially rectangular beam profile.

9. Laser ablation device for the ablation of a material, comprising:
a laser radiation source (1; 10) for providing a pulsed processing laser beam (50),
a laser beam aligning unit (6; 70) for decoupling the laser beam (50) in the direction of a region of the material to be ablated, and
an output device (5; 25) for outputting a photosensitizer in the direction of an area surrounding the region of the material that is to be ablated, the output device (5; 25) being connected, in particular, to the laser beam aligning unit (6; 70),
**characterized by**
a UV detector (8) for detecting UV radiation emitted by an area surrounding the ablated region , wherein
the laser beam aligning unit (6) has a UV reflecting coating at the inner wall thereof, by means of which the UV radiation emitted by the ablated region is forwarded in the direction towards the UV detector (8).

10. Laser ablation device according to Claim 9, in which the laser pulses have a temporal full-width at half maximum in a range between 100 fs and 1 ns.

11. Laser ablation device according to one of Claims 9 to 10, in which
a repetition rate of the laser pulses can be set in a range between 1 Hz and 10 MHz.

12. Laser ablation device according to one of Claims 9 to 11, in which
the wavelength of the laser pulses and the material of the photosensitizer are selected in such a way that the processing laser beam is absorbed at least partially by a single photon absorption in the photosensitizer, the absorption being in the vicinity of an absorption maximum of the photosensitizer.

13. Laser ablation device according to one of Claims 9 to 12, in which
the wavelength of the laser pulses and the material of the photosensitizer are selected in such a way that the processing laser beam is absorbed at least partially in the photosensitizer by an N photon absorption, with N ≥ 2, the absorption being in the vicinity of an absorption maximum of the photosensitizer.

14. Laser ablation device according to one of Claims 9 to 13, further comprising:
a fixing means (150) connected to the laser beam aligning unit (6; 70) for spatially fixing a distal end of the laser beam aligning unit (6; 70) with reference to a section of the material to be ablated.

## Revendications

1. Procédé pour l'ablation d'un matériau, à l'exception d'un tissu, du mercure et d'obturations d'amalgame, dans lequel, dans un mode de traitement, on met à disposition un faisceau laser de traitement pulsé,
un photosensibilisant étant amené dans un environnement spatial d'une zone d'un matériau à soumettre à une ablation, et le photosensibilisant étant irradié avec le faisceau laser de traitement pulsé, dans lequel
l'intensité et la longueur d'onde du faisceau laser de traitement sont sélectionnées de manière à ce que, lors de l'absorption du faisceau laser de traitement par le photosensibilisant, celui-ci passe à un état excité et que le photosensibilisant excité réagit directement avec le matériau et provoque ainsi l'ablation du matériau.

2. Procédé selon la revendication 1, dans lequel on détecte un rayonnement électromagnétique émis par un environnement de la zone ayant été soumise à l'ablation, et le faisceau laser de traitement pulsé étant réglé en fonction du rayonnement électromagnétique détecté.

3. Procédé selon les revendications 1 ou 2, dans lequel le faisceau laser pulsé est réglé de manière à satisfaire à au moins l'une des conditions suivantes:
la température d'un plasma généré avec le faisceau laser de traitement est de 11604,5 K au maximum, correspondant à 1 eV, l'énergie d'oscillation centrale des électrons dans le champ électromagnétique alternatif du faisceau laser de traitement est inférieure à 0,021 eV.

4. Procédé selon les revendications 2 et 3, dans lequel le faisceau laser de traitement pulsé est réglé dans un premier temps sur la base de calculs de manière à satisfaire à au moins l'une des conditions, et
au cours du fonctionnement du traitement, le faisceau laser de traitement étant réglé en fonction du rayonnement électromagnétique détecté.

5. Procédé selon l'une des revendications précédentes, dans lequel
le photosensibilisant et la longueur d'onde du faisceau laser sont sélectionnés de manière à ce que le faisceau laser de traitement soit absorbé au moins partiellement dans le photosensibilisant grâce à une absorption à un photon, dans lequel l'absorption se situe à proximité d'un maximum d'absorption du photosensibilisant.

6. Procédé selon l'une des revendications précédentes, dans lequel
le photosensibilisant et la longueur d'onde du faisceau laser sont sélectionnés de manière à ce que le faisceau laser de traitement soit absorbé au moins partiellement dans le photosensibilisant grâce à une absorption à N photons avec N ≥ 2, dans lequel l'absorption se situe à proximité d'un maximum d'absorption du photosensibilisant.

7. Procédé selon l'une des revendications précédentes, dans lequel
un taux de répétition des impulsions laser est réglé dans une plage comprise entre 1 Hz et 10 MHz.

8. Procédé selon l'une des revendications précédentes, dans lequel
le faisceau laser de traitement présente un profil de faisceau sensiblement rectangulaire.

9. Appareil d'ablation laser pour l'ablation d'un matériau, comprenant:
une source de faisceau laser (1; 10) pour la mise à disposition d'un faisceau laser de traitement pulsé (50), une unité d'orientation de faisceau laser (6; 70) pour le déclenchement du faisceau laser (50) en direction d'une zone du matériau devant être soumise à une ablation, et
un dispositif de délivrance (5 ; 25) pour la délivrance d'un photosensibilisant en direction d'un environnement de la zone du matériau à soumettre à l'ablation, le dispositif de délivrance (5; 25) étant en particulier relié à l'unité d'orientation de faisceau laser (6; 70),
**caractérisé par**
un détecteur d'UV (8) pour la détection d'un rayonnement UV émis par un environnement de la zone ayant été soumise à l'ablation, dans lequel
l'unité d'orientation de faisceau laser (6) présente, sur sa paroi intérieure, un revêtement réfléchissant les UV au moyen duquel le rayonnement UV émis par la zone ayant été soumise à l'ablation est retransmis en direction du détecteur d'UV (8).

10. Appareil d'ablation laser selon la revendication 9, dans lequel
les impulsions laser présentent une demi-largeur temporelle dans une plage comprise entre 100 fs et 1 ns.

11. Appareil d'ablation laser selon l'une des revendications 9 à 10, dans lequel
un taux de répétition des impulsions laser est réglable dans une plage comprise entre 1 Hz et 10 MHz.

12. Appareil d'ablation laser selon l'une des revendications 9 à 11, dans lequel
la longueur d'onde des impulsions laser et le matériau du photosensibilisant sont sélectionnés de manière à ce que le faisceau laser de traitement soit absorbé au moins partiellement dans le photosensibilisant grâce à une absorption à un photon, dans lequel l'absorption se situe à proximité d'un maximum d'absorption du photosensibilisant.

13. Appareil d'ablation laser selon l'une des revendications 9 à 12, dans lequel
la longueur d'onde des impulsions laser et le matériau du photosensibilisant sont sélectionnés de manière à ce que le faisceau laser de traitement soit absorbé au moins partiellement dans le photosensibilisant grâce à une absorption à N photons avec N ≥ 2, dans lequel l'absorption se situe à proximité d'un maximum d'absorption du photosensibilisant.

14. Appareil d'ablation laser selon l'une des revendications 9 à 13, comprenant par ailleurs:
un moyen de fixation (150) relié à l'unité d'orientation de faisceau laser (6; 70) pour la fixation spatiale d'une extrémité distale de l'unité d'orientation de faisceau laser (6; 70) par rapport à une partie du matériau à soumettre à l'ablation.
